# FASCICULE DE BREVET EUROPEEN

(11) **EP 3 732 819 B1**
(45) Date de publication et mention de la délivrance du brevet: **30.08.2023**
(21) Numéro de dépôt: 18842711.6
(22) Date de dépôt: 20.12.2018
(51) Int. Cl.: H04L 9/08, H04L 9/32, H04L 9/14

(54) **PROCÉDÉ D'ÉTABLISSEMENT D'UNE LIAISON SÉCURISÉE D'ÉCHANGE D'INFORMATIONS ENTRE UN PREMIER ET UN SECOND TERMINAL**
VERFAHREN ZUR HERSTELLUNG EINER SICHEREN VERBINDUNG ZUM AUSTAUSCH VON INFOMRATION ZWISCHEN EINEM ERSTEN UND EINEM ZWEITEN ENDGERÄT
METHOD OF ESTABLISHING A SECURE LINK TO EXCHANGE INFORMATION BETWEEN A FIRST AND A SECOND TERMINAL

(30) Priorité: 29.12.2017 FR 1763371
(43) Date de publication de la demande: 04.11.2020
(73) Titulaire: Viaccess, 92057 Paris La Défense Cedex (FR)
(72) Inventeur: BOIVIN, Mathieu, 93600 AULNAY-SOUS-BOIS (FR); DUBROEUCQ, Gilles, 28130 SAINT PIAT (FR)
(74) Mandataire: INNOV-GROUP
(86) Numéro de dépôt international: PCT/FR2018/053481
(87) Numéro de publication internationale: WO 2019/129970

(56) Documents cités:
- WO-A1-97/49213
- US-A1- 2011 045 780
- US-A1- 2014 219 449
- "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac/

## Description

L'invention concerne un procédé d'établissement d'une liaison sécurisée d'échange d'informations entre un premier et un second terminaux. L'invention concerne également des procédés d'exécution par, respectivement, le premier terminal et le second terminal, des étapes nécessaires pour la mise en oeuvre du procédé d'établissement d'une liaison sécurisée d'échange d'informations. Enfin, l'invention concerne également un premier et un second terminaux pour la mise en oeuvre de ce procédé d'établissement.

Il existe de nombreuses situations où il est nécessaire d'établir une clé cryptographique partagée entre deux terminaux. Par clé cryptographique partagée, on désigne une clé cryptographique secrète qui est seulement connue de ces deux terminaux. Cette clé cryptographique permet par exemple d'établir une liaison sécurisée d'échanges d'informations entre ces deux terminaux. En effet, ces informations peuvent alors par exemple être chiffrées, avec la clé cryptographique partagée, par l'un des terminaux avant d'être émis sur un réseau de transmission d'informations, puis déchiffrées, avec la même clé cryptographique partagée, par l'autre terminal lorsqu'il reçoit ces informations.

Il existe aussi des situations où une telle liaison sécurisée d'échanges d'informations ne doit pouvoir s'établir que si, en plus, les deux terminaux sont à proximité l'un de l'autre, c'est-à-dire proches géographiquement l'un de l'autre.

De l'état de la technique est connu de :
- WO97/49213A1,
- US2014/219449A1,
- Menezes A.J. et AI : « Handbook of applied cryptography », Chapitre 12 : « Key Establissement Protocols », CRC Press, Boca Raton, FL, US, Pages 489-541,
- US2011/045780A1.
En particulier WO97/49213A1 et US2014/219449A1 décrivent comment établir une clé cryptographique partagée entre deux terminaux en utilisant pour cela des mesures des propriétés physiques du canal de communication établi entre ces deux terminaux. Ces procédés ne permettent pas de conditionner l'établissement de la clé cryptographique partagée au fait que les terminaux sont géographiquement à proximité l'un de l'autre.

L'invention propose un procédé, conforme à la revendication 1, d'établissement d'une liaison sécurisée d'échange d'informations entre un premier et un second terminaux, conditionné au fait que ces deux terminaux soient à proximité l'un de l'autre.

Les modes de réalisation de ce procédé d'établissement peuvent présenter une ou plusieurs des caractéristiques des revendications dépendantes.

L'invention concerne également un procédé d'exécution par le premier terminal des étapes nécessaires pour la mise en oeuvre du procédé revendiqué d'établissement d'une liaison sécurisée d'échange d'informations.

L'invention concerne également un procédé d'exécution par le second terminal des étapes nécessaires pour la mise en oeuvre du procédé revendiqué d'établissement d'une liaison sécurisée d'échange d'informations.

L'invention a également pour objet un premier terminal pour la mise en oeuvre du procédé revendiqué d'établissement.

L'invention a également pour objet un second terminal pour la mise en oeuvre du procédé revendiqué d'établissement.

L'invention sera mieux comprise à la lecture de la description qui va suivre, donnée uniquement à titre d'exemple non limitatif et faite en se référant aux dessins sur lesquels :
- les figures 1 et 2 sont des illustrations schématiques de deux ensembles respectifs d'émetteurs sans fil ;
- la figure 3 est une illustration schématique de l'architecture d'un terminal ;
- la figure 4 est un organigramme d'un procédé d'établissement d'une clé cryptographique partagée ;
- les figures 5 à 7 sont des illustrations schématiques et partielles d'autres modes de réalisation possibles du procédé de la figure 4.

Dans ces figures, les mêmes références sont utilisées pour désigner les mêmes éléments.

Dans la suite de cette description, les caractéristiques et fonctions bien connues de l'homme du métier ne sont pas décrites en détail.

### Chapitre I : Exemples de modes de réalisation :

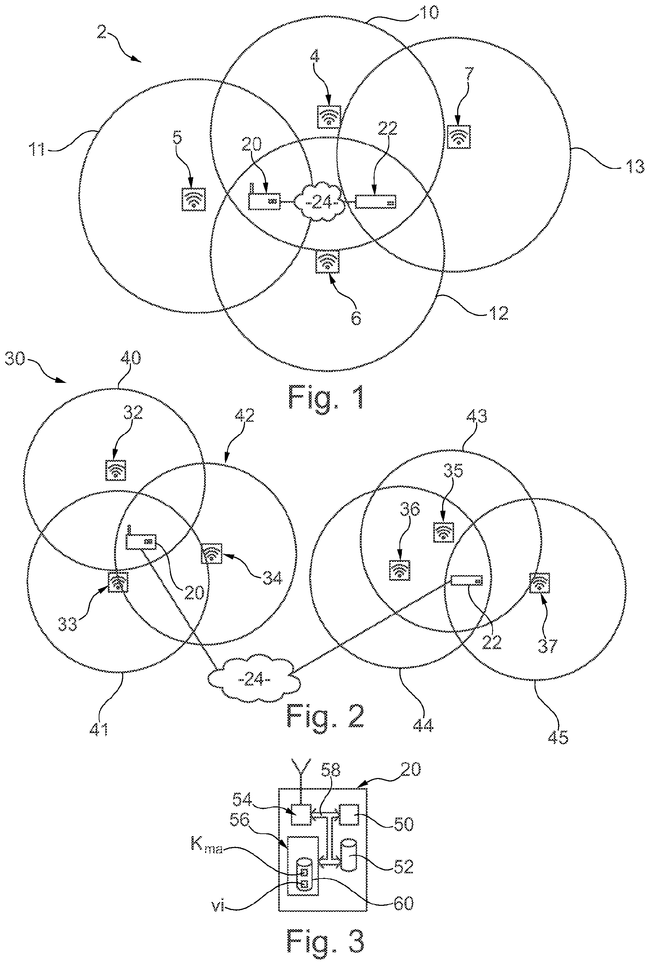

La figure 1 représente un ensemble 2 d'émetteurs sans fil. Dans le cas particulier représenté sur la figure 1, l'ensemble 2 comporte quatre émetteurs sans fil 4 à 7. Ici, les émetteurs 4 à 7 sont, par exemple, chacun une borne d'accès WIFI, également connue sous le terme de « point d'accès » (« access point », ou « Hotspot », en anglais) conforme, par exemple, à la norme ISO/CEI 8802-11. Chacun de ces émetteurs sans fil permet à un terminal d'établir une liaison sans fil avec cet émetteur pour, typiquement, communiquer avec les autres terminaux qui ont de façon analogue établi une liaison sans fil avec le même émetteur. Cette liaison sans fil est souvent appelée « connexion WIFI ». Chaque émetteur sans fil permet ainsi de former un réseau local sans fil.

À cet effet, chaque émetteur sans fil émet des ondes électromagnétiques ou « ondes radios » dont la portée est inférieure à X mètres. Typiquement, dans le cas des bornes d'accès WIFI, X est inférieur ou égal à 750 m ou 500 m, voire même inférieur ou égal à 350 m ou 250 m. Généralement, la portée X est supérieure à 2 m ou 10 m. Au-delà de cette distance de X mètres, la puissance des ondes électromagnétiques émises est systématiquement inférieure à un seuil Pₘᵢₙ de détectabilité en dessous duquel les ondes électromagnétiques ne peuvent pas être détectées ou utilisées par des terminaux. Dans ce mode de réalisation, pour simplifier, on suppose que les sensibilités de tous les terminaux sont identiques. Par conséquent, les seuils de sensibilité en dessous desquels ils ne peuvent pas détecter ou utiliser une onde électromagnétique émise par l'un quelconque des émetteurs 4 à 7 sont tous égaux à Pₘᵢₙ. Par exemple, dans le cas d'un réseau WIFI, le seuil Pₘᵢₙ est égal à -80 dBm ou -90 dBm ou -100 dBm. Ainsi, la portée de X mètres correspond à la distance au-delà de laquelle la puissance des ondes électromagnétiques émises par l'émetteur sans fil est inférieure au seuil Pₘᵢₙ. En pratique, cette distance n'est pas nécessairement la même dans toutes les directions car, par exemple, elle dépend de la présence d'obstacle ou autres perturbations. Toutefois, pour simplifier la figure 1, la distance X est supposée constante dans chaque direction. Ainsi, la zone de réception à l'intérieur de laquelle un terminal peut détecter la présence d'un émetteur sans fil est représentée par un cercle centré sur cet émetteur sans fil dans la figure 1. Plus précisément, dans la figure 1, ces zones de réception centrées sur les émetteurs 4 à 7 portent, respectivement, les références numériques 10 à 13. Par la suite, lorsqu'un terminal est situé à l'intérieur de la zone de réception d'un émetteur sans fil, on dit que cet émetteur sans fil est « à la portée » de ce terminal.

Les ondes électromagnétiques émises par chaque émetteur sont modulées en fonction d'une donnée caractéristique de l'émetteur sans fil. Ici, la donnée caractéristique est une donnée qui permet d'identifier sans ambiguïté l'émetteur sans fil qui émet ces ondes électromagnétiques parmi l'ensemble des émetteurs sans fil de l'ensemble 2. Par la suite, cette donnée caractéristique est notée Idᵢ, où l'indice i est un identifiant de l'émetteur sans fil. Par exemple, dans le cas des émetteurs sans fil WIFI, les ondes électromagnétiques émises par ces émetteurs sont modulées notamment en fonction :
- d'une étiquette SSID (« Service Set Identifier ») qui correspond au nom du réseau sans fil, et
- de l'adresse MAC (« Media Access Control ») de l'émetteur sans fil.

Ces données caractéristiques de l'émetteur peuvent être extraites par chaque terminal susceptible d'établir une connexion sans fil avec cet émetteur. Par la suite, les principaux modes de réalisation sont décrits dans le cas particulier où la donnée caractéristique Idᵢ est l'adresse MAC de l'émetteur.

La figure 1 représente également deux terminaux 20 et 22, chacun capable de détecter chacun des émetteurs 4 à 7. Dans l'ensemble 2, le terminal 20 est situé à un emplacement où seuls les émetteurs 4, 5 et 6 sont à sa portée. Le terminal 22 est situé à un emplacement où seuls les émetteurs 4, 6 et 7 sont à sa portée.

Les terminaux 20 et 22 sont également raccordés l'un à l'autre par l'intermédiaire d'un réseau 24. Le réseau 24 est par exemple un réseau grande distance de transmission d'informations. Le réseau 24 peut permettre aux terminaux 20 et 22 de communiquer entre eux quelle que soit la distance qui les sépare. Ici, le réseau 24 est un réseau qui fonctionne indépendamment de l'ensemble 2 d'émetteurs sans fil. Par exemple, le réseau 24 est un réseau téléphonique sans fil ou le réseau Internet.

La figure 2 représente les terminaux 20 et 22 disposés à l'intérieur d'un autre ensemble 30 d'émetteurs sans fil. L'ensemble 30 comporte six émetteurs sans fil 32 à 37. Les émetteurs 32 à 37 sont, par exemple, structurellement identiques aux émetteurs 4 à 7. Les zones de réception des émetteurs 32 à 37 portent, respectivement, les références numériques 40 à 45. Comme sur la figure 1, pour simplifier la représentation de chacune de ces zones de réception, celle-ci est représentée sous la forme d'un cercle centré sur l'émetteur sans fil correspondant. Dans cet ensemble 30, le terminal 20 est situé à un emplacement où seuls les émetteurs 32 à 34 sont à sa portée. Le terminal 22 est situé à un emplacement où seuls les émetteurs 35 à 37 sont à sa portée.

La figure 3 représente l'architecture du terminal 20. Le terminal 20 comporte :
- un microprocesseur conventionnel 50,
- une mémoire non volatile 52,
- un émetteur-récepteur sans fil 54,
- un cryptoprocesseur 56,
- un bus 58 d'échanges d'informations entre les différents composants précédents du terminal 20.

L'émetteur-récepteur 54 est un émetteur-récepteur WIFI capable de détecter et d'établir une connexion WIFI avec n'importe lequel des émetteurs sans fil des ensembles 2 et 30. L'autorisation d'accéder au réseau local d'un tel émetteur sans fil ou au réseau 24 par l'intermédiaire de cet émetteur sans fil est souvent conditionnée au fait que le terminal dispose des droits d'accès nécessaires. Par contre, même sans disposer des droits d'accès nécessaires, l'émetteur-récepteur 54 est capable d'extraire la donnée Idᵢ des ondes électromagnétiques émises par l'émetteur sans fil.

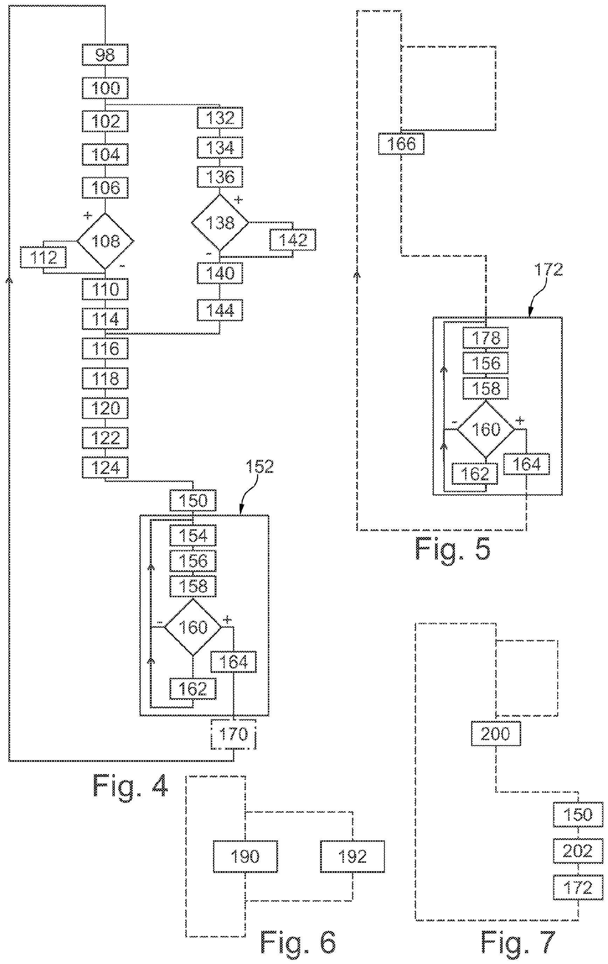

Le cryptoprocesseur 56 est capable d'exécuter des fonctions de chiffrement et de déchiffrement de données, ainsi que des fonctions de hachage (« hash function » en anglais). Le cryptoprocesseur 56 est conçu pour être plus résistant vis-à-vis des tentatives de cryptanalyse que, par exemple, le microprocesseur 50. À cet effet, il comporte notamment une mémoire non volatile sécurisée 60. La mémoire 60 est uniquement accessible et lisible par le cryptoprocesseur 56. En particulier, la mémoire 60 n'est pas accessible et n'est pas lisible par le microprocesseur 50. Ici, la mémoire 60 mémorise une clé Kₘₐ et un vecteur d'initialisation VI. La mémoire 60 mémorise aussi des instructions pour exécuter les étapes nécessaires à la mise en oeuvre de l'un quelconque des procédés des figures 4 à 7 lorsque ces instructions sont exécutées par le cryptoprocesseur 56. Dans ce mode de réalisation particulier, la mémoire 60 comporte l'ensemble des instructions nécessaires pour exécuter à la fois les étapes réalisées par le terminal 20 que celles réalisées par le terminal 22. Ainsi, les rôles des terminaux 20 et 22 peuvent être intervertis.

Pour simplifier, on suppose que l'architecture du terminal 22 est identique à celle du terminal 20. En particulier, la mémoire non volatile sécurisée du terminal 22 comporte également la clé Kₘₐ et le vecteur VI.

Le fonctionnement des terminaux 20 et 22 pour établir une clé KA₂₀ cryptographique partagée va maintenant être décrit en référence au procédé de la figure 4. Le procédé de la figure 4 est décrit dans le cas particulier où les terminaux 20 et 22 jouent les rôles, respectivement, de terminaux maître et esclave. Le terminal maître est celui qui déclenche le procédé d'établissement de la clé partagée KA₂₀.

Lors d'une étape 98, les terminaux 20 et 22 sont placés chacun à l'intérieur d'une ou plusieurs zones de réception d'un ensemble d'émetteurs sans fil tel que ceux décrits en référence aux figures 1 et 2. Ici, chaque émetteur sans fil émet en permanence des ondes électromagnétiques à partir desquelles les données caractéristiques Idᵢ peuvent être extraites.

Lors d'une étape 100, le terminal 20 transmet un signal de synchronisation au terminal 22, par exemple, par l'intermédiaire du réseau 24.

Ensuite, Δt₂₀ secondes après la transmission du signal de synchronisation, lors d'une étape 102, le terminal 20 capte et reçoit les ondes électromagnétiques émises par les N émetteurs sans fil qui sont à sa portée. À titre d'illustration, l'intervalle Δt₂₀ est égal à 0 seconde. De plus, lors de cette étape, l'émetteur-récepteur 54 mesure la puissance de chacune des ondes électromagnétiques reçues de manière à obtenir un indicateur de la puissance de l'onde électromagnétique reçue. Un tel indicateur est connu sous l'acronyme de RSSI (« Received Signal Strength Indicator ») dans le cas d'un réseau WIFI.

Lors d'une étape 104, l'émetteur-récepteur 54 démodule uniquement les ondes électromagnétiques reçues dont les puissances sont supérieures au seuil Pₘᵢₙ. Lors de cette étape, l'émetteur-récepteur 54 extrait en plus de chacun de ces signaux démodulés reçus la donnée caractéristique Idᵢ de chaque émetteur sans fil qui se trouve à sa portée. Ici, la donnée caractéristique Idᵢ comporte au moins l'adresse MAC de cet émetteur sans fil. Chacune des données caractéristiques Idᵢ extraite est associée à l'indicateur RSSI obtenu pour l'onde électromagnétique à partir de laquelle cette donnée Idᵢ a été extraite. On rappelle que tous les émetteurs sans fil ont une adresse MAC différente de sorte que la donnée caractéristique Idᵢ permet ici d'identifier sans ambiguïté l'émetteur de l'onde électromagnétique reçue parmi l'ensemble des émetteurs sans fil. La donnée caractéristique Idᵢ extraite peut aussi comporter des informations supplémentaires telles que l'étiquette SSID du réseau et/ou le nom du fabricant de l'émetteur sans fil. Ensuite, l'émetteur-récepteur 54 transmet chaque donnée Idᵢ extraite et l'indicateur RSSI qui lui est associé au cryptoprocesseur 56.

Lors d'une étape 106, le cryptoprocesseur 56 reçoit ces données Idᵢ extraites et les indicateurs RSSI associés. À l'issue de cette étape, le cryptoprocesseur 56 dispose donc d'une liste Le₂₀ comportant pour chaque émetteur sans fil à sa portée une ligne contenant :
- la donnée caractéristique Id_{¡} de cet émetteur sans fil, et
- l'indicateur RSSI de cet émetteur sans fil.

Lors d'une étape 108, le cryptoprocesseur 56 compare le nombre I₂₀ de lignes contenues dans la liste Le₂₀ à un seuil prédéterminé Lₘₐₓ.

Si le nombre I₂₀ de lignes est inférieur au seuil Lₘₐₓ, le cryptoprocesseur 56 procède directement à une étape 110. Dans le cas contraire, il procède à une étape 112.

Lors de l'étape 112, le cryptoprocesseur 56 sélectionne un nombre limité de lignes dans la liste Le₂₀ pour obtenir une liste raccourcie Le₂₀ᵣ contenant seulement Lₘₐₓ lignes. Pour cela, le cryptoprocesseur 56 utilise un premier jeu prédéterminé de critères de sélection. Par exemple, ici, ce premier jeu comporte un seul critère qui sélectionne uniquement les Lₘₐₓ lignes contenant les indicateurs RSSI les plus élevés. Ce critère de sélection conduit donc à sélectionner seulement les Lₘₐₓ données caractéristiques Idᵢ extraites des Lₘₐₓ ondes électromagnétiques reçues les plus puissantes. Les Lₘₐₓ ondes électromagnétiques reçues les plus puissantes correspondent généralement aux Lₘₐₓ émetteurs sans fil les plus proches du terminal 20. Le seuil Lₘₐₓ est généralement inférieur à 10 ou 7. Dans la suite de cette description, Lₘₐₓ est égal à 9.

À l'issue de l'étape 112, la liste Le₂₀ᵣ remplace la liste Le₂₀ et le procédé se poursuit par l'étape 110.

À l'étape 110, le cryptoprocesseur 56 construit une clé intermédiaire Kdᵢ,₂₀ pour chaque donnée caractéristique Idᵢ contenue dans la liste Le₂₀. Par la suite, l'indice « 20 » est utilisé pour indiquer qu'une donnée, par exemple ici la clé Kd_{i,20}, a été construite par le terminal 20. A cet effet, chaque clé Kdᵢ,₂₀ est construite à partir d'une seule donnée caractéristique Idᵢ correspondante. L'objectif de cette étape est de rendre difficile la construction des clés intermédiaires Kd_{i,20} par un tiers qui connaîtrait les données caractéristiques ldᵢ. Ici, pour cela, chaque clé intermédiaire Kd_{i,20} est en plus construite à partir d'informations secrètes connues seulement des terminaux 20 et 22. Dans cet exemple, les informations secrètes utilisées sont la clé Kₘₐ et le vecteur VI. Par exemple, chaque clé intermédiaire Kdᵢ,₂₀ est construite à l'aide de la relation suivante : Kdᵢ,₂₀ = f_{Ch}(VI XOR Idᵢ ; Kₘₐ), où :
- le symbole « XOR » désigne dans ce texte l'opération « ou exclusif »,
- VI XOR Idᵢ est le résultat de l'opération « ou exclusif » entre le vecteur VI et la donnée caractéristique Idᵢ, et
- f_{ch} est une fonction de chiffrement préenregistrée qui chiffre le résultat VI XOR Idᵢ à l'aide de la clé Kₘₐ.

Par exemple, la fonction f_{ch} est la fonction de chiffrement AES (« Advanced Encryption Standard »).

Chaque clé Kdᵢ,₂₀ construite est associée à l'indicateur RSSI de la donnée caractéristique Id_{¡} à partir de laquelle cette clé Kdᵢ,₂₀ a été construite. Par exemple, la clé Kdᵢ,₂₀ est ajoutée sur la ligne correspondante de la liste Le₂₀.

Lors d'une étape 114, le cryptoprocesseur 56 détermine un nombre Nₛ d'émetteurs sans fil communs qui doivent aussi être détectés par le terminal 22 pour que les terminaux 20 et 22 soient considérés comme étant à proximité l'un de l'autre. Ici, ce nombre Nₛ est déterminé en fonction du nombre I₂₀ de lignes de la liste Le₂₀. Il est donc déterminé en fonction du nombre d'émetteurs sans fil à la portée du terminal 20. Le cas échéant, la détermination du nombre Nₛ permet également de prendre en compte la faculté de l'un au moins des terminaux 20 et 22 à se trouver émetteur sans fil sans se détecter lui-même comme tel. Par exemple, le cryptoprocesseur 56 utilise pour cela la table T_{C} suivante :

| **I₂₀** | **Nₛ** | **Nombre maximum de sous-ensembles possibles (Kₘₐₓ)** |
|---|---|---|
| 9 | 7 | 36 |
| 8 | 6 | 28 |
| 7 | 4 | 35 |
| 6 | 3 | 20 |
| 5 | 3 | 10 |
| 4 | 2 | 6 |
| 3 | 2 | 3 |
| 2 | 1 | 2 |
| 1 | 1 | 1 |

où :
- la première colonne contient tous les nombres I₂₀ de lignes possibles pour la table Le₂₀,
- la seconde colonne contient la valeur du nombre Nₛ associé à ce nombre de lignes,
- la troisième colonne indique le nombre maximal Kₘₐₓ de sous-ensembles différents contenant chacun Nₛ émetteurs sans fil qu'il est possible de construire lorsque la liste Le₂₀ contient I₂₀ lignes. Le sous-ensemble (Kd_{1,20}, Kd_{2,20}, ... Kd_{Ns,20}) est un exemple d'un sous-ensemble de l'ensemble des clés construites à l'étape 110, correspondant à un tel sous-ensemble d'émetteurs sans fil. En effet, ici, chaque clé Kd_{i,20} correspond à un seul émetteur sans fil respectif. Un sous-ensemble est différent d'un autre sous-ensemble lorsqu'il contient au moins une clé Kd_{i,20} qui n'est pas contenue dans l'autre sous-ensemble.

Lors d'une étape 116, le cryptoprocesseur 56 construit ensuite, à partir des sous-ensembles possibles, K clés KS_{k,20} de chiffrement correspondantes. Plus précisément, chaque clé KS_{k,20} est construite à partir de chacune des clés Kdᵢ,₂₀ d'un seul sous-ensemble correspondant. Par exemple, la clé KS_{k,20} est construite à l'aide de la relation suivante : KS_{k,20} = Kd_{i1,20} XOR Kd_{i2,20} XOR ... XOR Kd_{iNs,20}, où Kd_{ij,20} désigne une clé Kd_{i,20} respective du sous-ensemble. Autrement dit, la clé KS_{k,20} est obtenue en réalisant un « ou exclusif » entre toutes les clés Kd_{ij,20} du sous-ensemble correspondant à cette clé KS_{k,20}. Étant donné qu'il existe ici Kₘₐₓ sous-ensembles différents, à l'issue de l'étape 116, le cryptoprocesseur 56 a construit Kₘₐₓ clés KS_{k,20} différentes. Autrement dit, dans ce mode de réalisation, K est égal à Kₘₐₓ.

Lors d'une étape 118, le cryptoprocesseur 56 obtient la clé KA₂₀ à partager avec le terminal 22. Ici, par exemple, le cryptoprocesseur 56 génère la clé KA₂₀ par tirage aléatoire ou pseudo-aléatoire.

Lors d'une étape 120, le cryptoprocesseur 56 chiffre la clé KA₂₀ avec chacune des clés KS_{k,20} pour obtenir K cryptogrammes KA*_{k,20} différents. Par exemple, lors de cette étape, chaque cryptogramme KA*_{k,20} est obtenu à l'aide de la relation suivante : KA*_{k,20} = f_{ch}(KA₂₀ ; KS_{k,20}). La fonction f_{ch} de chiffrement est par exemple la même que celle décrite précédemment.

Lors d'une étape 122, le cryptoprocesseur 56 construit une empreinte numérique KA₂₀-Check de la clé KA₂₀ à l'aide d'une fonction de hachage, c'est-à-dire à l'aide d'une fonction dite à sens unique, c'est-à-dire en pratique non-inversible. Par exemple, l'empreinte KA₂₀-Check est construite à l'aide de la relation suivante : KA₂₀-Check = f_{H}(KA₂₀), où f_{H} est une fonction de hachage. Par exemple, la fonction f_{H} est la fonction connue sous le nom de SHA256.

Lors d'une étape 124, le terminal 20 transmet au terminal 22 un message de défi ou de « challenge ». Ce message contient notamment :
- le nombre Nₛ déterminé à l'étape 114,
- l'empreinte KA₂₀-Check construite à l'étape 122,
- les K cryptogrammes KA*_{k,20} obtenus à l'étape 120.

Ce message est, par exemple, transmis au terminal 22 par l'intermédiaire du réseau 24.

En réponse au signal de synchronisation, le terminal 22 déclenche, Δt₂₂ secondes après la réception de ce signal, l'exécution d'étapes 132 à 144. La durée Δt₂₂ est choisie pour que les étapes 132 et 134 s'exécutent en même temps ou pratiquement en même temps que les étapes 102 et 104. Par exemple, à cet effet, ici, la durée Δt₂₂ est choisie égale à la durée Δt₂₀. Les étapes 132 à 144 sont identiques, respectivement, aux étapes 102 à 114 sauf qu'elles sont exécutées par le terminal 22. En particulier, le premier jeu de critères de sélection utilisé lors de l'étape 142 est le même que celui utilisé lors de l'étape 112. Toutefois, comme illustré sur les figures 1 et 2, le terminal 22 n'est pas nécessairement situé au même emplacement que le terminal 20. Dans ces conditions, les données caractéristiques Idᵢ extraites lors de l'étape 134 ne sont pas nécessairement les mêmes que celles extraites par le terminal 20. Ainsi, la liste Le₂₀ construite par le terminal 22 ne contient pas nécessairement le même nombre de lignes et/ou les mêmes données caractéristiques extraites et/ou les mêmes étiquettes RSSI. Pour distinguer la liste Le₂₀ du terminal 22 de celle du terminal 20, la liste Le₂₀ du terminal 22 est notée « Le₂₂» par la suite. Le nombre de clés intermédiaires Kdᵢ,₂₀ construites et les clés intermédiaires Kd_{i,20} construites, par le terminal 22, lors de l'étape 144, ne sont pas nécessairement identiques à ceux du terminal 20. Par la suite, pour distinguer les clés Kdᵢ,₂₀ construites par le terminal 22 de celles construites par le terminal 20, les clés intermédiaires construites lors de l'étape 144 sont notées « Kd_{1,22} » au lieu de « Kdᵢ,₂₀ ». De même, le nombre de clés intermédiaires construites lors de l'étape 144 est noté I₂₂ au lieu de I₂₀. Toujours à cause de ces différences, le nombre de clés KS_{k,20} et les clés KS_{k,20} que peut construire le terminal 22 ne sont pas nécessairement les mêmes que dans le cas du terminal 20. Par la suite, pour les distinguer, les clés KS_{k,20} construites par le terminal 22 sont notées KS_{m,22}. Le nombre de clés KS_{m,22} construites par le terminal 22 est noté « M » au lieu de « K ».

Lors d'une étape 150, le terminal 22 reçoit le message de défi.

En réponse à la réception de ce message de défi, lors d'une étape 152, le cryptoprocesseur du terminal 22 déchiffre chacun des cryptogrammes KA*_{k,20} contenus dans ce message. Plus précisément, tant qu'un cryptogramme KA*_{k,20} reçu n'a pas été correctement déchiffré, le cryptoprocesseur du terminal 22 réitère en boucle des opérations 154 à 160. Avant de procéder à la réitération des opérations 154 à 160, le cryptoprocesseur du terminal 22 sélectionne un cryptogramme KA*_{k,20} parmi les K cryptogrammes KA*_{k,20} reçus lors de l'étape 150

Lors de l'opération 154, le cryptoprocesseur du terminal 22 construit une nouvelle clé KS_{m,22} qui n'a pas déjà été utilisée pour essayer de déchiffrer le cryptogramme KA*_{k,20}. Pour construire la clé KS_{m,22}, le cryptoprocesseur du terminal 22 procède exactement de la même façon que ce qui a été décrit en référence à l'étape 116. Ainsi, lors de l'opération 154, chaque clé KS_{m,22} est construite à l'aide de la relation suivante : KS_{m,22} = Kd_{i1,22} XOR Kd_{i2,22} XOR ... XOR Kd_{iNs,22}, où Kd_{ij,22} désigne une clé Kd_{i,22} respective du sous-ensemble. Le nombre Nₛ utilisé pour construire les clé KS_{m,22} est celui reçu lors de l'étape 150. Les clés Kd_{i,22} utilisées sont celles construites lors de l'étape 144.

Étant donné que la liste Le₂₂ ne contient pas nécessairement les mêmes données caractéristiques que la liste Le₂₀, les clés KS_{m,22} construites par le terminal 22 ne sont pas nécessairement les mêmes que les clés KS_{k,20} construites par le terminal 20. Toutefois, si le terminal 22 est suffisamment à proximité du terminal 20, comme par exemple dans la situation représentée sur la figure 1, les listes Le₂₀ et Le₂₂ comportent chacune au moins Nₛ données caractéristiques Idᵢ identiques. Dans ce cas, au moins une des clés KS_{m,22} construites par le terminal 22 est identique à l'une des clés KS_{k,20} construites par le terminal 20. Le terminal 22 est donc capable, uniquement dans ce cas, de déchiffrer correctement l'un des cryptogrammes KA*_{k,20} reçus et ainsi obtenir la clé KA₂₀ partagée avec le terminal 20.

À l'inverse, si les terminaux 20 et 22 sont suffisamment éloignés l'un de l'autre, comme dans la situation représentée dans la figure 2, les listes Le₂₀ et Le₂₂ comportent chacune moins de Nₛ données caractéristiques identiques. Dès lors, aucune des clés KS_{m,22} construites par le terminal 22 n'est identique à l'une des clés KS_{k,20} construites par le terminal 20. Dans cette situation, aucune des clés KS_{m,22} ne permet de déchiffrer correctement l'un des K cryptogrammes KA*_{k,20} reçus. Le terminal 22 ne peut donc pas obtenir la clé KA₂₀ s'il est éloigné du terminal 20.

Lors de l'opération 156, le cryptoprocesseur du terminal 22 déchiffre le cryptogramme KA*_{k,20} sélectionné avec la clé KS_{m,22} construite lors de l'opération 154. À l'issue de l'opération 156, il obtient une clé KA₂₂. Par exemple, cette opération est réalisée à l'aide de la relation suivante : KA₂₂ = f_{ch}⁻¹(KA*_{k,2o} ; KS_{m,22}). La fonction de déchiffrement f_{ch}⁻¹ est l'inverse de la fonction f_{ch} précédemment décrite.

Lors de l'opération 158, le cryptoprocesseur du terminal 22 construit l'empreinte numérique KA₂₂-Check de la clé KA₂₂ obtenue à l'issue de l'opération 156. Pour cela, la même fonction f_{H} de hachage que celle utilisée lors de l'étape 122 est mise en oeuvre. Ici, l'empreinte KA₂₂-Check est donc construite selon la relation suivante : KA₂₂-Check = f_{H}(KA₂₂).

Lors de l'opération 160, le cryptoprocesseur du terminal 22 compare l'empreinte KA₂₂-Check construite lors de l'opération 158 à l'empreinte KA₂₀-Check reçue lors de l'étape 150.

Si les empreintes KA₂₂-Check et KA₂₀-Check sont différentes, cela signifie que le cryptogramme KA*_{k,20} n'a pas été correctement déchiffré. C'est typiquement ce qui se produit lorsque la clé KS_{m,22} utilisée pour déchiffrer le cryptogramme KA*_{k,20} est différente de la clé KS_{k,20} utilisée pour obtenir ce cryptogramme. Dans ce cas, le procédé retourne à l'opération 154. La réitération suivante des opérations 154 à 160 est exécutée avec une nouvelle clé KS_{m,22}, construite lors de la nouvelle exécution de l'opération 154, qui n'a pas déjà été utilisée pour déchiffrer le cryptogramme KA*_{k,20} sélectionné.

Si toutes les clés KS_{m,22} ont déjà été utilisées, sans succès, pour essayer de déchiffrer correctement le cryptogramme KA*_{k,20} actuellement sélectionné, alors, lors d'une étape 162, le cryptoprocesseur du terminal 22 sélectionne, parmi les K cryptogrammes KA*_{k,20} reçus lors de l'étape 150, un nouveau cryptogramme KA*_{k,20} qui n'a pas déjà été sélectionné. Ensuite, les opérations 154 à 160 sont réitérées pour ce nouveau cryptogramme KA*_{k,20} sélectionné.

Lors de l'étape 162, si les K cryptogrammes KA*_{k,20} reçus lors de l'étape 150 ont tous déjà été sélectionnés, alors le procédé s'arrête. Dans ce cas, la clé KA₂₀ n'est pas partagée entre les terminaux 20 et 22. En effet, le terminal 22 n'a réussi à déchiffrer correctement aucun des cryptogrammes KA*_{k,20} reçus lors de l'étape 150, ni, donc, à obtenir la clé KA₂₀. Cela résulte du fait que ces deux terminaux 20 et 22 ne sont pas à proximité l'un de l'autre.

Si lors de l'opération 160, le cryptoprocesseur du terminal 22 détermine que les empreintes KA₂₀-Check et KA₂₂-Check sont identiques, le cryptogramme KA*_{k,20} a été correctement déchiffré. Dans ce cas, la clé KA₂₂ obtenue à l'issue de l'étape 156 est identique à la clé KA₂₀. Le procédé se poursuit alors par une opération 164.

Lors de l'opération 164, le cryptoprocesseur du terminal 22 mémorise la clé KA₂₂ comme étant la clé partagée avec le terminal 20. De plus, ici, lors de l'opération 164, le terminal 22 envoie un message au terminal 20 pour lui indiquer qu'il dispose maintenant lui aussi de la clé KA₂₀.

Ensuite, le procédé se poursuit par une phase 170 d'échanges sécurisés d'informations. Par exemple, lors de la phase 170, les terminaux 20 et 22 établissent une liaison sécurisée d'échanges d'informations entre eux. Pour cela, le cryptoprocesseur 56 chiffre avec la clé KA₂₀ les informations transmises au terminal 22, par exemple par l'intermédiaire du réseau 24, et le terminal 22 déchiffre ces informations reçues avec sa clé KA₂₂. Lors de cette phase 170, de façon réciproque, les informations transmises du terminal 22 vers le terminal 20 sont chiffrées avec la clé KA₂₂ et le cryptoprocesseur 56 déchiffre ces informations à l'aide de la clé KA₂₀.

De préférence, les étapes 100 à 152 sont réitérées à intervalles réguliers pour s'assurer que le terminal 22 est toujours à proximité du terminal 20. Par exemple, l'intervalle régulier est inférieur à 24 heures ou 4 heures ou 1 heure ou 30 minutes.

La figure 5 présente un procédé identique au procédé de la figure 4 sauf que les étapes 116 et 152 sont remplacées, respectivement, par des étapes 166 et 172. Pour simplifier la figure 5, seules les étapes 166 et 172 ont été représentées. Les pointillés sur les figures 5 à 7 indiquent que les autres étapes du procédé n'ont pas été représentées.

L'étape 166 est identique à l'étape 116 sauf que le cryptoprocesseur 56 sélectionne un nombre K de sous-ensembles strictement inférieur au nombre maximum Kₘₐₓ de sous-ensembles possibles. Pour cela, le cryptoprocesseur 56 utilise un second jeu prédéterminé de critères de sélection.

Par exemple, ici, ce second jeu comporte un seul critère de sélection qui impose que chacun des K sous-ensembles sélectionnés comporte :
- Nₕ clés Kdᵢ,₂₀ associées à un indicateur RSSI supérieur à un premier seuil prédéterminé Pₕ, et
- Nₛ-Nₕ clés Kd_{i,20} associées à un indicateur RSSI inférieur à un second seuil P_{f}. Le seuil P_{f} est inférieur ou égal au seuil Pₕ. Par exemple, ici, les seuils Pₕ et P_{f} sont égaux à -50 dBm. Ainsi, chacun des K sous-ensembles sélectionnés pour construire une clé KS_{k,20} comporte :
- Nₕ clés Kdᵢ,₂₀ obtenues à partir de données caractéristiques Id_{¡} extraites d'ondes électromagnétiques reçues de forte puissance, c'est-à-dire de puissance supérieure à Pₕ, et
- Nₛ-Nₕ clés Kd_{i,20} obtenues à partir de données caractéristiques Idᵢ extraites d'ondes électromagnétiques de faible puissance, c'est-à-dire de puissance inférieure à P_{f}.

Par exemple, Nₕ est une constante prédéterminée ou, de préférence, déterminée en fonction du nombre de lignes I₂₀ de la liste Le₂₀.

Ainsi, chacun des K clés KS_{k,20} est construite à l'aide de la relation suivante : KS_{k,20} = Ks₁ XOR Ks₂ XOR ... XOR Ks_{Ns-Nh} XOR Kh₁ XOR ... XOR Kh_{Nh}, où :
- Ksᵢ est une clé Kd_{i,20} obtenue à partir d'une donnée caractéristique Idᵢ extraite d'ondes électromagnétiques reçues dont la puissance est inférieure au seuil P_{f}, et
- Khᵢ est une clé Kdᵢ,₂₀ obtenue à partir des données caractéristiques Idᵢ extraites d'ondes électromagnétiques reçues de puissance supérieure ou égale au seuil Pₕ.

Le terminal 20 transmet, par exemple lors de l'étape 124, le nombre Nₕ au terminal 22. Par exemple, le nombre Nₕ est contenu dans le message de défi.

L'étape 172 est identique à l'étape 152, sauf que l'opération 154 est remplacée par une opération 178.

Lors de l'opération 178, le cryptoprocesseur du terminal 22 utilise le même second jeu de critères de sélection pour sélectionner les sous-ensembles à partir desquels il construit les clés KS_{m,22}.

La figure 6 représente un procédé identique au procédé de la figure 4 sauf que l'étape 110 est remplacée par une étape 190. De façon similaire, l'étape 140 est remplacée par une étape 192.

Lors de l'étape 190, chaque clé Kd_{i,21} est en plus construite à partir d'une donnée qui varie à chaque fois que l'étape 110 est exécutée. Ainsi, même si les données caractéristiques Idᵢ extraites sont les mêmes, chaque nouvelle exécution de l'étape 190 conduit à construire des clés Kdᵢ,₂₀ différentes. Par exemple, à cet effet, lors de l'étape 190, un nouveau vecteur VI est tiré aléatoirement ou pseudo-aléatoirement puis, ce nouveau vecteur VI est transmis au terminal 22. Par exemple, le nouveau vecteur VI est incorporé au message de défi transmis au terminal 22. L'étape 192 est exécutée qu'après avoir reçu le nouveau vecteur VI. L'étape 192 est identique à l'étape 140 sauf qu'elle utilise le nouveau vecteur VI reçu pour construire chacune des clés Kd_{i,22}.

Grâce à cela, à chaque nouvelle exécution de l'étape 116, les clés KS_{k,20} construites sont différentes de celles construites lors des précédentes exécutions de l'étape 116. Dès lors, il n'est plus possible d'essayer d'exploiter le fait que les clés KS_{k,20} restent inchangées à chaque itération des étapes 102 à 116 pour obtenir la clé KA₂₀ alors que les terminaux 20 et 22 ne sont pas à proximité l'un de l'autre. En effet, dans le cas où les clés KS_{k,20} restent inchangées tant que son environnement électromagnétique reste inchangé, un terminal pirate peut essayer d'enregistrer les clés KS_{m,22} construites lors d'une précédente itération de l'étape 152. Puis, pour les exécutions suivantes de l'étape 152, au lieu de construire les clés KS_{m,22} à partir des données caractéristiques extraites de l'environnement électromagnétique actuel de ce terminal pirate, il utilise les clés KS_{m,22} enregistrées afin de déchiffrer les cryptogrammes KA*_{k,20} reçus. Une telle fraude, bien que très difficile à mettre en oeuvre, permettrait au terminal pirate d'établir la clé KA₂₂ partagée même si celui-ci a été éloigné du terminal 20 et à condition que les émetteurs sans fil à la portée du terminal 20 restent inchangés.

La figure 7 représente un procédé identique au procédé de la figure 5 sauf que l'étape 166 est remplacée par une étape 200 et une étape 202 est insérée entre les étapes 150 et 172. Dans ce mode de réalisation, les seconds jeux de critères de sélection préenregistrés dans les terminaux 20 et 22 sont identiques et comportent chacun plusieurs critères de sélection possibles.

Lors de l'étape 200, un nombre Nₐ est tiré aléatoirement ou pseudo-aléatoirement. Ensuite, toujours lors de cette étape 200, ce nombre Nₐ est utilisé pour choisir dans le second jeu de critères de sélection, le critère qui va être utilisé pour sélectionner les sous-ensembles utilisés pour construire les clés KS_{k,20}. Ce nombre Nₐ est également transmis au terminal 22 avant que débute l'exécution de l'étape 172.

Ensuite, à partir du nombre Nₐ reçu et en appliquant le même algorithme de choix que celui mis en oeuvre par le terminal 20, lors de l'étape 202, le terminal 22 choisit, dans le second jeu de critères de sélection, un critère de sélection. Ensuite, ce critère de sélection est mis en oeuvre lors de l'opération 178 pour sélectionner les sous-ensembles utilisés pour construire les clés KS_{m,22}. Étant donné que le terminal 22 utilise le même nombre Nₐ et le même algorithme de choix, il choisit le même critère de sélection que celui utilisé par le terminal 20. Comme dans le procédé de la figure 6, cela permet de faire varier les clés KS_{k,20} même si l'environnement électromagnétique du terminal 20 reste inchangé lors de chaque réitération de l'étape 200.

### Chapitre II : Variantes :

Dans l'ensemble des variantes décrites ici, l'homme du métier comprend que lorsque des modifications du procédé exécuté par le terminal maître sont proposées, généralement, des modifications correspondantes doivent être réalisées sur le terminal esclave. Ainsi, dans la suite de ce chapitre, seules les modifications soit du terminal maître soit du terminal esclave sont décrites.

### Chapitre II.1 : Variantes des opérations de chiffrement :

Il existe de nombreuses fonctions de chiffrement et de déchiffrement utilisables dans les modes de réalisation décrits ici. Par exemple, dans un mode de réalisation simplifié, la fonction de chiffrement est simplement un « ou exclusif » entre la clé KA₂₀ et les données caractéristiques Idᵢ extraites ou les clés Kdᵢ,₂₀ ou la clé KS_{k,20}.

De nombreuses méthodes sont possibles pour générer la clé KS_{k,20} à partir des données caractéristiques Idᵢ extraites. Par exemple, dans un mode de réalisation simplifié, chaque clé KS_{k,20} est construite à l'aide de la relation suivante : KS_{k,20} = Idᵢ₁, XOR Idᵢ₂ XOR ... XOR Id_{iNs}. Dans ce cas, les clés intermédiaires Kd_{i,20} ne sont pas utilisées et la clé Kₘₐ et le vecteur VI peuvent être omis. Dans une autre variante, la clé KS_{k,20} est construite à l'aide de la relation suivante : KS_{k,20} = f_{ch}(Idᵢ₁, XOR Idᵢ₂ XOR ... XOR Id_{iNs} ; Kₘₐ). Dans ce cas, les étapes de construction des clés intermédiaires Kd_{i,20} peuvent être omises.

La clé Kₘₐ peut être commune à tous les terminaux.

La clé intermédiaire Kd_{i,20} peut être construite différemment. Par exemple, la clé Kdᵢ,₂₀ peut aussi être construite à l'aide de la relation suivante : Kd_{i,20} = f_{ch}(Kₘₐ ; VI XOR Idᵢ). Dans ce cas, c'est la clé Kₘₐ qui est chiffrée en utilisant comme clé le résultat de l'opération VI XOR Idᵢ. Il existe bien sûr de nombreuses autres possibilités pour obtenir la clé Kdᵢ,₂₀ à partir de la donnée caractéristique Idᵢ et d'une information secrète. Par exemple, l'utilisation du vecteur VI peut être omise.

Dans tous les modes de réalisation, l'opération XOR peut être remplacée par n'importe quelle opération commutative comme par exemple l'opération NAND.

L'étape 110 peut être omise. Dans ce cas, les clés KS_{k,20} sont directement construites à partir des données caractéristiques Idᵢ sans qu'une information secrète, telle que la clé Kₘₐ ou le vecteur VI, soit utilisée.

En variante, la clé KA₂₀ est obtenue différemment. Par exemple, au lieu d'être générée par tirage aléatoire ou pseudo-aléatoire, elle est préenregistrée dans une mémoire non volatile du premier terminal. Dès lors, l'obtention de la clé KA₂₀ consiste simplement à lire la clé KA₂₀ dans cette mémoire non volatile. Dans une autre variante, la clé KA₂₀ est générée à partir des données caractéristiques Idᵢ extraites. En fait, les procédés de partage de la clé KA₂₀ décrits ici s'appliquent quelle que soit la méthode d'obtention de la clé KA₂₀.

### Variantes des jeux de critères de sélection :

D'autres modes de réalisation du premier jeu de critères de sélection sont possibles. Le premier jeu peut comporter d'autres critères de sélection en plus ou à la place du critère de sélection en fonction de l'indicateur RSSI. Par exemple, en variante, il comporte un critère de sélection qui exclut de la liste Le₂₀ᵣ tous les émetteurs sans fil fabriqués par un fabricant particulier. Dans un autre exemple, il comporte un critère de sélection tel que le terminal sélectionne de préférence les données caractéristiques Idᵢ d'émetteurs sans fil dont les fabricants appartiennent à une liste préenregistrée de fabricants connus. De même, plusieurs critères de sélection différents peuvent être combinés. Dans ce dernier cas, les différents critères de sélection peuvent être pondérés, les uns par rapport aux autres, à l'aide de coefficients de pondération.

Le premier jeu peut aussi comporter un critère de sélection qui élimine systématiquement chaque donnée caractéristique Idᵢ extraite d'une onde électromagnétique reçue dont la puissance est inférieure à un seuil prédéterminé P_{f}. Par exemple, le seuil P_{f} est égal à -70 dBm.

Lors de la mise en oeuvre du critère de sélection du second jeu, pour sélectionner les Nₛ - Nₕ clés Kd_{i,20}, le critère de sélection peut être de sélectionner les Nₛ - Nₕ clés Kdᵢ,₂₀ construites à partir de données caractéristiques Idᵢ extraites d'ondes électromagnétiques reçues de puissance comprise dans [Pₘ; Pₕ[, où Pₘ est un seuil prédéterminé strictement inférieur à Pₕ. Pour sélectionner les Nₕ clés Kd_{i,20}, le critère de sélection peut être de sélectionner ces Nₕ clés Kdᵢ,₂₀ dans un sous-ensemble contenant uniquement les Nₕ clés Kdᵢ,₂₀ associées aux Nₕ adresses MAC les plus grandes. Nₕ est strictement inférieur à Nₛ et, de préférence, supérieur à deux. Ce critère de sélection est un premier exemple de critère de sélection qui ne dépend pas de la puissance des ondes électromagnétiques reçues. De façon plus générale, toute autre méthode susceptible de mener de manière déterministe à la même sélection de clés Kdᵢ,₂₀ par les terminaux 20 et 22 lorsque ces terminaux 20 et 22 sont situés au même emplacement est acceptable.

En variante, le nombre Nₕ est une constante préenregistrée dans chaque terminal, par exemple lors de la fabrication. Dans ce cas, le nombre Nₕ n'a pas besoin d'être transmis au terminal 22.

Dans d'autres variantes, les critères de sélection du second jeu ne prennent pas en compte la puissance des ondes électromagnétiques reçues. Par exemple, les clés Kdᵢ,₂₀ sont classées par ordre croissant ou décroissant d'adresse MAC et seuls les sous-ensembles contenant exclusivement des clés Kd_{i,20} appartenant à la première moitié de ce classement sont sélectionnées. Les clés Kdᵢ,₂₀ peuvent aussi être classées par ordre croissant ou décroissant d'une empreinte numérique f_{H}(@MACᵢ) au lieu d'utiliser directement leur adresse MAC, où @MACᵢ est l'adresse MAC associée à la clé Kd_{i,20}. Dans une autre variante, après avoir été classé par ordre croissant ou décroissant d'adresses MAC ou d'indicateur RSSI, seules les sous-ensembles contenant uniquement des clés Kdᵢ,₂₀ de rang pair ou de rang impair dans ce classement sont sélectionnés.

Le second jeu de critères de sélection peut comporter, en plus ou à la place, d'autres critères de sélection que ceux déjà décrits précédemment. Par exemple, à la place de comporter un critère de sélection qui sélectionne uniquement les sous-ensembles qui ont Nₕ clés Kdᵢ,₂₀ obtenues à partir de données caractéristiques Idᵢ extraites d'ondes électromagnétiques de forte puissance, le second jeu comporte un critère de sélection qui sélectionne uniquement les sous-ensembles dans lesquels :
- Nₛₕ clés Kdᵢ,₂₀ sont obtenues à partir de données caractéristiques Idᵢ extraites d'ondes électromagnétiques de puissance supérieure à -50 dBm ;
- Nₛₕ clés Kdᵢ,₂₀ sont obtenues à partir de données caractéristiques Idᵢ extraites d'ondes électromagnétiques de puissance comprise entre -60 dBm et -50 dBm ;
- Nₛₘ clés Kdᵢ,₂₀ sont obtenues à partir de données caractéristiques Idᵢ extraites d'ondes électromagnétiques de puissance comprise entre -70 dBm et -60 dBm, et
- N_{sf} clés Kdᵢ,₂₀ sont obtenues à partir de données caractéristiques Idᵢ extraites d'ondes électromagnétiques de puissance inférieure à -70 dBm.

### Variantes de la détermination du nombre Nₛ :

Le nombre Nₛ peut être déterminé différemment. Par exemple, dans un mode de réalisation simplifié, Nₛ est une constante égale à un.

En variantes, le terminal 20 ne transmet pas au terminal 22 le nombre Nₛ. Dans ce cas, le terminal 22 doit en plus essayer successivement les différentes valeurs possibles du nombre Nₛ. Cela conduit le terminal 22 à construire des clés KS_{m,22} successivement à partir d'une seule clé Kd_{i,22}, puis de deux clés Kd_{i,22}, puis de trois clés Kd_{i,22} jusqu'à un seuil Nₛₘₐₓ prédéterminé pour le nombre Nₛ.

Dans une autre variante, le nombre Nₛ est une constante. Par exemple, le nombre Nₛ peut être enregistré dans tous les terminaux lors de la fabrication. Dans ce mode de réalisation, il n'est pas nécessaire de transmettre le nombre Nₛ au terminal 22 lors de l'étape 124. Ce mode de réalisation est notamment utilisable dans le cas où le nombre d'émetteurs sans fil dans l'environnement de chacun des terminaux est une constante connue à l'avance.

### Autres variantes :

L'étape 100 peut être omise. Dans ce cas, le déclenchement des étapes 102, 104 et 132, 134 se fait de manière asynchrone, c'est-à-dire sans que ces déclenchements soient synchronisés temporellement entre eux.

Dans une autre variante, c'est le message de défi qui remplit en plus la fonction de signal de synchronisation. Dans ce cas, les étapes 132 à 144 sont déclenchées uniquement en réponse à la réception du message de défi.

Le procédé ci-dessus peut aussi être utilisé pour partager une clé entre plus de deux terminaux. Pour cela, le terminal 20 transmet le message de défi à un troisième terminal en plus du terminal 22. Ensuite, ce troisième terminal exécute les mêmes opérations et mêmes étapes que le terminal 22 pour établir la clé KA₂₀ partagée avec les terminaux 20 et 22.

Les modes de réalisation décrits ici peuvent facilement être adaptés pour exploiter la présence, à proximité des terminaux d'autres émetteurs sans fil que ceux d'un réseau WIFI. Par exemple, ce qui a été décrit ici s'applique à des réseaux Bluetooth ou LoRa ou tout autre réseau support de l'IoT (pour « Internet of Things », en anglais), ou Internet des objets. En particulier, un même ensemble peut comporter des émetteurs sans fil compatibles avec différents standards. Par exemple, dans un même ensemble d'émetteur sans fil, il peut exister à la fois des émetteurs WIFI et des émetteurs Bluetooth. Dans ce cas, les terminaux sont équipés à la fois d'un émetteur-récepteur WIFI et d'un émetteur-récepteur Bluetooth de sorte qu'une partie des clés Kdᵢ,₂₀ est construite à partir de données caractéristiques d'émetteurs WIFI et une autre partie des clés Kd_{i,20} est construite à partir de données caractéristiques d'émetteurs Bluetooth. Ainsi, dans ce mode de réalisation, la présence simultanée de plusieurs émetteurs sans fil conforme à des standards différents est exploitée pour s'assurer de la proximité des terminaux.

En variante, en réponse à la réception du message de défi, le terminal 22 déclenche une minuterie qui décompte une durée D1. Lorsque la durée D1 s'est écoulée, le cryptoprocesseur du terminal 22 interrompt systématiquement l'exécution de l'étape 152 même si la clé KA₂₂ partagée n'a pas encore été obtenue. De préférence, la durée D1 est initialisée en fonction du nombre Nₛ.

Les clés KS_{k,20} peuvent aussi être construites en prenant en compte d'autres informations locales. Par exemple, dans le cas où les terminaux 20 et 22 sont également raccordés à un même réseau local filaire, le terminaux 20 et 22 relèvent les adresses MAC de tous les appareils raccordés à ce réseau filaire local. Ensuite, le terminal 20 génère chaque clé KS_{k,20} en prenant en compte en plus, par exemple, les adresses MAC relevées. Par exemple, à cet effet, le cryptoprocesseur additionne les unes aux autres les adresses MAC relevées. Ensuite, il combine la somme ainsi obtenue avec chacune des clés KS_{k,20} construite, par exemple à l'aide d'une opération « ou exclusif », pour obtenir une nouvelle clé KS_{k,20} qui est ensuite utilisée à la place de la précédente clé KS_{k,20}. Dès lors, le terminal 22 ne peut déchiffrer correctement le cryptogramme KA*_{k,20} que s'il se trouve en plus raccordé au même réseau filaire que le terminal 20.

Un émetteur sans fil peut être un répéteur de signaux sans fil émis par un autre émetteur sans fil source. Dans ce cas, les signaux émis par le répéteur comportent la même étiquette SSID que ceux émis par l'émetteur sans fil source. Par contre, l'adresse MAC du répéteur est différente de celle de l'émetteur sans fil source.

En variante, le cryptoprocesseur 56 est omis. Dans ce cas, l'ensemble des étapes est exécuté par le microprocesseur 50.

En variante, le terminal 20 est uniquement configuré pour jouer le rôle de terminal maître et le terminal 22 est uniquement configuré pour jouer le rôle de terminal esclave. Ainsi, dans ce mode de réalisation, les rôles des terminaux 20 et 22 ne peuvent pas être interchangés.

En variante, les terminaux 20 et 22 communiquent entre eux par l'intermédiaire des émetteurs sans fil. Dans ce cas, le réseau 24 est le réseau WIFI supporté par le signal émis par l'un des émetteurs sans fil qui est à la fois à la portée des terminaux 20 et 22. Dans une autre variante, le réseau 24 est un réseau WIFI supporté par un signal émis par l'un des terminaux 20, 22.

Les sensibilités de tous les terminaux ne sont pas nécessairement identiques. Par exemple, en variante, les seuils Pₘᵢₙ des terminaux 20 et 22 sont différents. Dans, ce cas, le seuil de sensibilité du terminal 20 est noté Pₘᵢₙ₂₀ et le seuil de sensibilité du terminal 22 est noté Pₘᵢₙ₂₂.

Le seuil Lₘₐₓ utilisé par terminal 22 peut être différent du seuil Lₘₐₓ utilisé par le terminal 20. Dans ce cas, les seuils Lₘₐₓ des terminaux 20 et 22 sont notés, respectivement, Lₘₐₓ₁ et Lₘₐₓ₂.

D'autres données caractéristiques que l'adresse MAC des émetteurs sans fil sont utilisables pour mettre en oeuvre les procédés décrits ici. Par exemple, en variante, la donnée caractéristique ne comporte pas l'adresse MAC mais l'identifiant du réseau connu sous l'acronyme SSID et/ou le nom du fabricant de l'émetteur sans fil. La donnée caractéristique peut aussi être une combinaison de plusieurs données caractéristiques extraites des ondes électromagnétiques reçues.

De préférence, le nombres K est inférieur aux nombres N. Toutefois, dans les modes de réalisation où Nₛ est supérieure à deux ou trois, le nombre K peut être supérieur au nombre N.

### Chapitre III : Avantages des modes de réalisation décrits ici

Dans les procédés décrits ici, les terminaux 20 et 22 ne peuvent réussir à établir une clé cryptographique partagée que si ces terminaux sont à proximité l'un de l'autre. En effet, s'ils sont éloignés l'un de l'autre, les émetteurs sans fil situés à la portée du terminal 20 sont alors différents de ceux situés à la portée du terminal 22. Dans ces conditions, les données caractéristiques Idᵢ extraites des ondes électromagnétiques émises par les émetteurs sans fil à la portée du terminal 20 ne sont pas les mêmes que celles extraites par le terminal 22. Dans ce cas, le terminal 22 ne peut pas construire une clé KS_{m,22} identique à l'une des clés KS_{k,20} construites par le terminal 20. Dès lors, le terminal 22 est incapable de déchiffrer correctement le cryptogramme KA*_{k,20} reçu et ne peut donc pas obtenir la clé KA₂₀ partagée.

Ce procédé présente également de nombreux autres avantages. En particulier, ce procédé est fiable car pour déterminer la proximité des terminaux :
- il n'est pas nécessaire de mesurer le temps de propagation des signaux échangés entre ces terminaux,
- il n'est pas nécessaire d'exploiter un paramètre des trames d'informations échangées entres les terminaux représentatifs du nombre de noeuds que traverse cette trame d'informations avant d'atteindre l'autre terminal. Un tel paramètre est souvent connu sous le terme de « time to live » dans le protocole IP.
- il n'est pas nécessaire d'exploiter l'adresse IP affectée aux terminaux.

Le temps de propagation, les paramètres des trames d'informations échangées entre les terminaux ainsi que les adresses IP de ces terminaux sont des éléments qui peuvent facilement être modifiés pour laisser croire que ces terminaux sont à proximité l'un de l'autre.

Les procédés décrits permettent aussi d'établir une clé cryptographique partagée entre plus de deux terminaux. Il n'est pas non plus nécessaire qu'un canal de communication soit établi entre les deux terminaux avant que la clé partagée soit générée.

Le fait de synchroniser l'extraction par les terminaux des données Idᵢ permet de rendre le procédé moins sensible à l'ajout ou à la suppression d'émetteurs sans fil.

L'utilisation de l'adresse MAC en tant que donnée caractéristique augmente la fiabilité du procédé car l'adresse MAC d'un émetteur sans fil est difficilement modifiable et, en tout état de cause, plus difficilement modifiable qu'une étiquette SSID.

Limiter le nombre de données caractéristiques Idᵢ utilisées permet d'accélérer l'exécution des étapes suivantes.

Limiter le nombre de clé KS_{k,20} en fonction d'un critère de sélection qui tient compte de la puissance des ondes électromagnétiques reçues permet de limiter encore plus la distance maximale Dₘₐₓ qui peut séparer deux terminaux pour que ceux-ci soient encore considérés comme étant à proximité l'un de l'autre. En effet, dans ce cas, non seulement les terminaux 20 et 22 doivent détecter les mêmes émetteurs sans fil mais en plus les puissances des ondes électromagnétiques reçues de ces émetteurs sans fil doivent être similaires.

Le fait de construire le cryptogramme KA*_{k,20} uniquement à partir d'une combinaison de plusieurs données caractéristiques extraites impose que pour pouvoir établir la clé partagée, le terminal 22 doit aussi être à proximité de ces Nₛ émetteurs sans fil. Cela diminue la distance maximale Dₘₐₓ. Cela rend également plus difficiles les attaques qui consisteraient à essayer de reproduire l'environnement du terminal 20 autour du terminal 22.

Imposer l'utilisation de Nₕ données caractéristiques Idᵢ extraites d'ondes électromagnétiques de puissance supérieure à Pₕ, et Nₛ - Nₕ données caractéristiques extraites d'ondes électromagnétiques de puissance inférieure à P_{f} diminue encore plus la distance Dₘₐₓ. De plus, cela diminue le nombre de clés KS_{k,20}, ce qui accélère l'exécution du procédé.

Choisir les critères de sélection du premier ou du second jeu en fonction d'un nombre aléatoire ou pseudo-aléatoire permet de renouveler les clés KS_{k,20} même si les émetteurs sans fil dans l'environnement du terminal 20 restent inchangés.

## Revendications

1. Procédé d'établissement, par l'intermédiaire d'un réseau grande distance de transmission d'informations, d'une liaison sécurisée d'échange d'informations entre un premier et un second terminaux, conditionné au fait que ces deux terminaux soient à proximité l'un de l'autre, dans lequel :
- chaque émetteur sans fil, d'un ensemble d'émetteurs sans fil comportant au moins un émetteur sans fil, émet des ondes électromagnétiques modulées, au moins par instant, en fonction d'une donnée caractéristique de cet émetteur sans fil ou du réseau local sans fil auquel il appartient, chacun des émetteurs sans fil de cet ensemble étant différent des premier et second terminaux,
une donnée caractéristique d'un émetteur sans fil étant une donnée qui permet d'identifier sans ambiguïté cet émetteur sans fil qui émet les ondes électromagnétiques parmi l'ensemble des émetteurs sans fil dudit ensemble et une donnée caractéristique d'un réseau local sans fil étant une donnée qui permet d'identifier sans ambiguïté le réseau local sans fil auquel appartient l'émetteur sans fil qui émet les ondes électromagnétiques,
- le premier terminal exécutant les étapes suivantes :
- il obtient (118) une clé KA₂₀ à partager avec le second terminal,
a1) il reçoit (102) les ondes électromagnétiques émises par les émetteurs sans fil dont les puissances, au niveau de ce premier terminal, sont supérieures à un premier seuil prédéterminé Pₘᵢₙ₁ de détectabilité, le nombre de ces émetteurs dont les ondes électromagnétiques sont reçues par le premier terminal étant égal à un premier entier naturel N supérieur ou égal à un,
b1) il extrait (104), par démodulation des ondes électromagnétiques reçues, uniquement les données caractéristiques émises par chacun de ces N émetteurs sans fil,
c1) il construit (106-116 ; 166 ; 190 ; 200) une clé KS_{k,20} de chiffrement à partir d'au moins une donnée caractéristique extraite lors de l'étape b1), puis d1) il chiffre (120) la clé KA₂₀ à l'aide de la clé KS_{k,20} de chiffrement construite, les étapes c1) et d1) étant réitérées pour K données caractéristiques extraites distinctes de manière à obtenir K cryptogrammes KA*_{k,20} différents, où K est un deuxième entier naturel supérieur ou égal à un,
e1) il construit (122) une empreinte numérique KA₂₀-Check de la clé KA₂₀ à l'aide d'une fonction de hachage,
f1) il transmet (124) au second terminal chacun des K cryptogrammes KA*_{k,20} et l'empreinte numérique KA₂₀-Check,
- le second terminal exécutant les étapes suivantes :
a2) il reçoit (132) les ondes électromagnétiques émises par les émetteurs sans fil dont les puissances, au niveau de ce second terminal, sont supérieures à un second seuil prédéterminé Pₘᵢₙ₂ de détectabilité, le nombre de ces émetteurs dont les ondes électromagnétiques sont reçues par le second terminal étant égal à un troisième entier naturel J supérieur ou égal à un,
b2) il extrait (134), par démodulation des ondes électromagnétiques reçues, uniquement les données caractéristiques émises par chacun de ces J émetteurs sans fil,
c2) il construit (136-144, 154 ; 178 ; 192 ; 202) M clés KS_{m,22} différentes en procédant pour chaque clé KS_{m,22} de la même manière que lors de l'étape c1) mais en utilisant les données caractéristiques extraites lors de l'étape b2) à la place des données caractéristiques extraites lors de l'étape b1), où M est un quatrième entier naturel supérieur ou égal à un,
d2) il reçoit les K cryptogrammes KA*_{k,20} et l'empreinte numérique KA₂₀-Check transmis par le premier terminal,
e2) tant qu'au moins un des cryptogrammes KA*_{k,20} reçu n'a pas été correctement déchiffré, il réitère successivement les étapes suivantes en sélectionnant (162) à chaque fois un nouveau cryptogramme choisi dans le groupe constitué des K cryptogrammes KA*_{k,20} reçus :
d2-1) il déchiffre (156) le cryptogramme sélectionné à l'aide de l'une des clés KS_{m,22} construites et obtient ainsi une clé KA₂₂,
d2-2) il construit (158) une empreinte numérique KA₂₂-Check de cette clé KA₂₂ à l'aide de la même fonction de hachage que celle utilisée lors de l'étape e1),
d2-3) il compare (160) cette empreinte KA₂₂-Check construite à l'empreinte KA₂₀-Check reçue,
d2-4) si les empreintes numériques KA₂₀-Check et KA₂₂-Check sont différentes, il retourne à l'étape d2-1) pour exécuter à nouveau les étapes d2-1) à d2-3) à l'aide d'une nouvelle clé KS_{m,22}, et
d2-5) seulement si les empreintes numériques KA₂₀-Check et KA₂₂-Check sont identiques, le cryptogramme KA*_{k,20} a été correctement déchiffré et il mémorise (164) la clé KA₂₂ comme étant la clé identique à la clé KA₂₀ qui est maintenant partagée avec le premier terminal, puis
- après l'étape d2-5), le procédé comporte l'utilisation de la clé KA₂₂, qui est maintenant partagée, pour établir la liaison sécurisée d'échange d'informations sur laquelle les informations échangées sont déchiffrées et chiffrées entre ces deux terminaux à l'aide de cette clé KA₂₂, cette liaison sécurisée étant établie par l'intermédiaire du réseau grande distance de transmission d'informations qui fonctionne indépendamment des émetteurs sans-fil dudit ensemble d'émetteurs sans fil.

2. Procédé selon la revendication 1, dans lequel :
- l'un des premier et second terminaux transmet (100) un signal de synchronisation à l'autre des premier et second terminaux, puis
- en réponse à la transmission de ce signal de synchronisation, le premier terminal déclenche l'exécution des étapes a1) et b1) et le second terminal déclenche l'exécution des étapes a2) et b2).

3. Procédé selon l'une quelconque des revendications précédentes, dans lequel chaque donnée caractéristique extraite comporte au moins l'adresse MAC (« Media Access Control ») de l'émetteur sans fil des ondes électromagnétiques reçues.

4. Procédé selon l'une quelconque des revendications précédentes, dans lequel :
- après l'étape b1) et avant l'étape c1), le premier terminal compare (108) le nombre de données caractéristiques extraites à un seuil prédéterminé Lₘₐₓ₁ et uniquement si le nombre de données caractéristiques extraites est supérieur à ce seuil Lₘₐₓ₁, le premier terminal sélectionne (112) Lₘₐₓ₁ données caractéristiques parmi l'ensemble des données caractéristiques extraites lors de l'étape b1) en fonction d'un premier jeu prédéterminé de critères de sélection, puis seules les données caractéristiques ainsi sélectionnées sont utilisées lors des étapes suivantes par le premier terminal,
- après l'étape b2) et avant l'étape c2), le second terminal compare (138) le nombre de données caractéristiques extraites à un seuil prédéterminé Lₘₐₓ₂ et uniquement si le nombre de données caractéristiques extraites est supérieur à ce seuil Lₘₐₓ₂, le second terminal sélectionne (142) Lₘₐₓ₂ données caractéristiques extraites parmi l'ensemble des données caractéristiques extraites lors de l'étape b2) en fonction du même premier jeu prédéterminé de critères de sélection.

5. Procédé selon la revendication 4, dans lequel le premier jeu comporte un critère de sélection qui sélectionne uniquement les données caractéristiques extraites des ondes électromagnétiques reçues les plus puissantes.

6. Procédé selon l'une quelconque des revendications précédentes, dans lequel, lors de l'étape c1), chaque clé KS_{k,20} est construite (106-116 ; 166 ; 190 ; 200) à partir de chacune des données caractéristiques d'un sous-ensemble respectif d'au moins Nₛ données caractéristiques différentes extraites lors de l'étape b1), les sous-ensembles utilisés pour construire les K clés KS_{k,20} différant les uns des autres par les données caractéristiques qu'ils contiennent, où Nₛ est un nombre minimal prédéterminé de données caractéristiques qui doivent être communes au premier et au second terminaux pour qu'ils soient considérés comme étant à proximité l'un de l'autre, le nombre Nₛ étant supérieur ou égal à deux.

7. Procédé selon la revendication 6, dans lequel, lors de l'étape c1), parmi la totalité des sous-ensembles possibles de Nₛ clés, le premier terminal en sélectionne (166 ; 200) seulement K en fonction d'un second jeu prédéterminé de critères de sélection.

8. Procédé selon la revendication 7, dans lequel le second jeu de critères de sélection comporte un critère prédéterminé de sélection qui sélectionne seulement les sous-ensemble qui contiennent un nombre Nₕ prédéterminé de données caractéristiques extraites d'ondes électromagnétiques reçues dont la puissance est supérieure à un premier seuil prédéterminé Pₕ et Nₛ-Nₕ données caractéristiques extraites d'ondes électromagnétiques reçues dont les puissances sont inférieures à un deuxième seuil P_{f}, où Nₕ est inférieur à Nₛ et le deuxième seuil P_{f} est inférieur ou égal au seuil Pₕ.

9. Procédé selon l'une quelconque des revendications 6 à 8, dans lequel, lors de l'étape c1), le premier terminal détermine (114) le nombre Nₛ en fonction du nombre de données caractéristiques extraites lors de l'étape b1).

10. Procédé selon l'une des quelconques revendications précédentes, dans lequel :
- le premier terminal tire (200) un nombre aléatoire ou pseudo aléatoire, puis
- le premier terminal choisit (200), parmi les jeux préenregistrés de plusieurs premiers ou plusieurs seconds critères de sélection, un premier ou un second critère de sélection à utiliser en fonction de ce nombre aléatoire ou pseudo-aléatoire tiré, et
- le premier terminal transmet ce nombre aléatoire ou pseudo-aléatoire tiré au second terminal, et
- en réponse, le second terminal choisit (202), dans le même ensemble préenregistré de plusieurs premiers ou seconds jeux de critères de sélection et de la même manière que le premier terminal, le premier ou le second critère de sélection à utiliser en fonction du nombre aléatoire ou pseudo-aléatoire reçu.

11. Procédé selon l'une quelconque des revendications précédentes, dans lequel, lors de l'étape c1), le premier terminal construit chaque clé KS_{k,20} de chiffrement à partir, en plus, d'une information secrète connue du second terminal et inconnue d'un troisième terminal, ce troisième terminal étant apte lui-aussi à exécuter les étapes a2) à e2).

12. Procédé d'exécution par le premier terminal des étapes nécessaires pour la mise en oeuvre d'un procédé conforme à l'une quelconque des revendications précédentes, lors de l'exécution de ce procédé, le premier terminal exécutant les étapes suivantes :
- il obtient (118) une clé KA₂₀ à partager avec le second terminal,
a1) il reçoit (102) les ondes électromagnétiques émises par les émetteurs sans fil dont les puissances, au niveau de ce premier terminal, sont supérieures à un premier seuil prédéterminé Pₘᵢₙ₁ de détectabilité, le nombre de ces émetteurs dont les ondes électromagnétiques sont reçues par le premier terminal étant égal à un premier entier naturel N supérieur ou égal à un, chacun de ces émetteurs sans fil étant différent des premier et second terminaux,
b1) il extrait (104), par démodulation des ondes électromagnétiques reçues, uniquement les données caractéristiques émises par chacun de ces N émetteurs sans fil,
c1) il construit (106-116 ; 166 ; 190 ; 200) une clé KS_{k,20} de chiffrement à partir d'au moins une donnée caractéristique extraite lors de l'étape b1), puis d1) il chiffre (120) la clé KA₂₀ à l'aide de la clé KS_{k,20} de chiffrement construite, les étapes c1) et d1) étant réitérées pour K données caractéristiques extraites distinctes de manière à obtenir K cryptogrammes KA*_{k,20} différents, où K est un deuxième entier naturel supérieur ou égal à un,
e1) il construit (122) une empreinte numérique KA₂₀-Check de la clé KA₂₀ à l'aide d'une fonction de hachage,
f1) il transmet (124) au second terminal chacun des K cryptogrammes KA*_{k,20} et l'empreinte numérique KA₂₀-Check, puis
- après l'étape d2-5), il utilise la clé KA₂₀ , qui est maintenant partagée, pour établir la liaison sécurisée d'échange d'informations sur laquelle les informations échangées sont déchiffrées et chiffrées entre ce premier terminal et le second terminal à l'aide de cette clé KA₂₀, cette liaison sécurisée étant établie par l'intermédiaire du réseau grande distance de transmission d'informations qui fonctionne indépendamment des émetteurs sans-fil.

13. Procédé d'exécution par le second terminal des étapes nécessaires pour la mise en oeuvre d'un procédé conforme à l'une quelconque des revendications 1 à 11, lors de l'exécution de ce procédé, le second terminal exécutant les étapes suivantes :
a2) il reçoit (132) les ondes électromagnétiques émises par les émetteurs sans fil dont les puissances, au niveau de ce second terminal, sont supérieures à un second seuil prédéterminé Pₘᵢₙ₂ de détectabilité, le nombre de ces émetteurs dont les ondes électromagnétiques sont reçues par le second terminal étant égal à un troisième entier naturel J supérieur ou égal à un, chacun de ces émetteurs sans fil étant différent des premier et second terminaux,
b2) il extrait (134), par démodulation des ondes électromagnétiques reçues, uniquement les données caractéristiques émises par chacun de ces J émetteurs sans fil,
c2) il construit (136-144, 154 ; 178 ; 192 ; 202) M clés KS_{m,22} différentes en procédant pour chaque clé KS_{m,22} de la même manière que lors de l'étape c1) mais en utilisant les données caractéristiques extraites lors de l'étape b2) à la place des données caractéristiques extraites lors de l'étape b1), où M est un quatrième entier naturel supérieur ou égal à un,
d2) il reçoit les K cryptogrammes KA*_{k,20} et l'empreinte numérique KA₂₀-Check transmis par le premier terminal,
e2) tant qu'au moins un des cryptogrammes KA*_{k,20} reçu n'a pas été correctement déchiffré, il réitère successivement les étapes suivantes en sélectionnant (162) à chaque fois un nouveau cryptogramme choisi dans le groupe constitué des K cryptogrammes KA*_{k,20} reçus :
d2-1) il déchiffre (156) le cryptogramme sélectionné à l'aide de l'une des clés KS_{m,22} construites et obtient ainsi une clé KA₂₂,
d2-2) il construit (158) une empreinte numérique KA₂₂-Check de cette clé KA₂₂ à l'aide de la même fonction de hachage que celle utilisée lors de l'étape e1),
d2-3) il compare (160) cette empreinte KA₂₂-Check construite à l'empreinte KA₂₀-Check reçue,
d2-4) si les empreintes numériques KA₂₀-Check et KA₂₂-Check sont différentes,
il retourne à l'étape d2-1) pour exécuter à nouveau les étapes d2-1) à d2-3) à l'aide d'une nouvelle clé KS_{m,22}, et
d2-5) seulement si les empreintes numériques KA₂₀-Check et KA₂₂-Check sont identiques, le cryptogramme KA*_{k,20} a été correctement déchiffré et il mémorise (164) la clé KA₂₂ comme étant la clé identique à la clé KA₂₀ qui est maintenant partagée avec le premier terminal, puis
- après l'étape d2-5), il utilise la clé KA₂₂, qui est maintenant partagée, pour établir la liaison sécurisée d'échange d'informations sur laquelle les informations échangées sont déchiffrées et chiffrées entre ce second terminal et le premier terminal à l'aide de cette clé KA₂₂, cette liaison sécurisée étant établie par l'intermédiaire du réseau grande distance de transmission d'informations qui fonctionne indépendamment des émetteurs sans-fil.

14. Premier terminal (11) pour la mise en oeuvre d'un procédé conforme à l'une quelconque des revendications 1 à 11, le premier terminal étant configuré pour exécuter les étapes suivantes :
- obtenir une clé KA₂₀ à partager avec le second terminal,
a1) recevoir les ondes électromagnétiques émises par les émetteurs sans fil dont les puissances, au niveau de ce premier terminal, sont supérieures à un premier seuil prédéterminé Pₘᵢₙ₁ de détectabilité, le nombre de ces émetteurs dont les ondes électromagnétiques sont reçues par le premier terminal étant égal à un premier entier naturel N supérieur ou égal à un,
b1) extraire, par démodulation des ondes électromagnétiques reçues, uniquement les données caractéristiques émises par chacun de ces N émetteurs sans fil,
c1) construire une clé KS_{k,20} de chiffrement à partir d'au moins une donnée caractéristique extraite lors de l'étape b1), puis
d1) chiffrer la clé KA₂₀ à l'aide de la clé KS_{k,20} de chiffrement construite, les étapes c1) et d1) étant réitérées pour K données caractéristiques extraites distinctes de manière à obtenir K cryptogrammes KA*_{k,20} différents, où K est un deuxième entier naturel supérieur ou égal à un,
e1) construire une empreinte numérique KA₂₀-Check de la clé KA₂₀ à l'aide d'une fonction de hachage,
f1) transmettre au second terminal chacun des K cryptogrammes KA*_{k,20} et l'empreinte numérique KA₂₀-Check, puis
- après l'étape d2-5), utiliser la clé KA₂₀, qui est maintenant partagée, pour établir la liaison sécurisée d'échange d'informations sur laquelle les informations échangées sont déchiffrées et chiffrées entre ce premier terminal et le second terminal à l'aide de cette clé KA₂₀, cette liaison sécurisée étant établie par l'intermédiaire du réseau grande distance de transmission d'informations qui fonctionne indépendamment des émetteurs sans-fil.

15. Second terminal (22) pour la mise en oeuvre d'un procédé conforme à l'une quelconque des revendications 1 à 11, le second terminal étant configuré pour exécuter les étapes suivantes :
a2) recevoir les ondes électromagnétiques émises par les émetteurs sans fil dont les puissances, au niveau de ce second terminal, sont supérieures à un second seuil prédéterminé Pₘᵢₙ₂ de détectabilité, le nombre de ces émetteurs dont les ondes électromagnétiques sont reçues par le second terminal étant égal à un troisième entier naturel J supérieur ou égal à un,
b2) extraire, par démodulation des ondes électromagnétiques reçues, uniquement les données caractéristiques émises par chacun de ces J émetteurs sans fil,
c2) construire M clés KS_{m,22} différentes en procédant pour chaque clé KS_{m,22} de la même manière que lors de l'étape c1) mais en utilisant les données caractéristiques extraites lors de l'étape b2) à la place des données caractéristiques extraites lors de l'étape b1), où M est un quatrième entier naturel supérieur ou égal à un,
d2) recevoir les K cryptogrammes KA*_{k,20} et l'empreinte numérique KA₂₀-Check transmis par le premier terminal,
e2) tant qu'au moins un des cryptogrammes KA*_{k,20} reçu n'a pas été correctement déchiffré, réitérer successivement les étapes suivantes en sélectionnant à chaque fois un nouveau cryptogramme choisi dans le groupe constitué des K cryptogrammes KA*_{k,20} reçus :
d2-1) déchiffrer le cryptogramme sélectionné à l'aide de l'une des clés KS_{m,22} construites et obtient ainsi une clé KA₂₂,
d2-2) construitre une empreinte numérique KA₂₂-Check de cette clé KA₂₂ à l'aide de la même fonction de hachage que celle utilisée lors de l'étape e1),
d2-3) comparer cette empreinte KA₂₂-Check construite à l'empreinte KA₂₀-Check reçue,
d2-4) si les empreintes numériques KA₂₀-Check et KA₂₂-Check sont différentes, retourner à l'étape d2-1) pour exécuter à nouveau les étapes d2-1) à d2-3) à l'aide d'une nouvelle clé KS_{m,22}, et
d2-5) seulement si les empreintes numériques KA₂₀-Check et KA₂₂-Check sont identiques, le cryptogramme KA*_{k,20} a été correctement déchiffré et il mémorise la clé KA₂₂ comme étant la clé identique à la clé KA₂₀ qui est maintenant partagée avec le premier terminal, cette clé KA₂₂ étant utilisable pour déchiffrer et chiffrer les échanges d'informations entre ces deux terminaux,
- après l'étape d2-5), utiliser la clé KA₂₂, qui est maintenant partagée, pour établir la liaison sécurisée d'échange d'informations sur laquelle les informations échangées sont déchiffrées et chiffrées entre ce second terminal et le premier terminal à l'aide de cette clé KA₂₂, cette liaison sécurisée étant établie par l'intermédiaire du réseau grande distance de transmission d'informations qui fonctionne indépendamment des émetteurs sans-fil.

## Patentansprüche

1. Verfahren zum Aufbau, mittels eines Informationsübertragung-Fernnetzes, einer gesicherten Informationsaustauschverbindung zwischen einem ersten und einem zweiten Endgerät, abhängig von der Tatsache, dass diese zwei Endgeräte nahe beieinander sind, wobei:
- jeder drahtlose Sender einer mindestens einen drahtlosen Sender aufweisenden Einheit drahtloser Sender elektromagnetische Wellen sendet, die zumindest zeitweise abhängig von einem Kenndatenwert dieses drahtlosen Senders oder des drahtlosen lokalen Netzes, zu dem er gehört, moduliert werden, wobei jeder der drahtlosen Sender dieser Einheit sich von den ersten und zweiten Endgeräten unterscheidet, wobei ein Kenndatenwert eines drahtlosen Senders ein Datenwert ist, der es ermöglicht, diesen drahtlosen Sender, der die elektromagnetischen Wellen sendet, unter der Einheit der drahtlosen Sender dieser Einheit unzweideutig zu identifizieren, und ein Kenndatenwert eines drahtlosen lokalen Netzes ein Datenwert ist, der es ermöglicht, das drahtlose lokale Netz unzweideutig zu identifizieren, zu dem der drahtlose Sender gehört, der die elektromagnetischen Wellen sendet,
- wobei das erste Endgerät die folgenden Schritte ausführt :
- es erhält (118) einen mit dem zweiten Endgerät gemeinsam zu nutzenden Schlüssel KA₂₀,
a1) es empfängt (102) die von den drahtlosen Sendern gesendeten elektromagnetischen Wellen, deren Leistungen im Bereich dieses ersten Endgeräts höher sind als eine erste vorbestimmte Erkennbarkeitsschwelle Pₘᵢₙ₁, wobei die Anzahl dieser Sender, deren elektromagnetische Wellen vom ersten Endgerät empfangen werden, gleich einer ersten natürlichen Zahl N höher als oder gleich eins ist,
b1) es entnimmt (104), durch Demodulation der empfangenen elektromagnetischen Wellen, nur die von jedem dieser N drahtlosen Sender gesendeten Kenndaten,
c1) es konstruiert (106-116; 166; 190; 200) einen Verschlüsselungsschlüssel KS_{k.20} ausgehend von mindestens einem im Schritt b1) entnommenen Kenndatenwert, dann d1) verschlüsselt es (120) den Schlüssel KA₂₀ mit Hilfe des konstruierten Verschlüsselungsschlüssels KS_{k.20}, wobei die Schritte c1) und d1) für K unterschiedliche entnommene Kenndaten wiederholt werden, um K unterschiedliche Kryptogramme KA*_{k.20} zu erhalten, wobei K eine zweite natürliche Zahl höher als oder gleich eins ist,
e1) es konstruiert (122) einen digitalen Abdruck KA₂₀-Check des Schlüssels KA₂₀ mit Hilfe einer Hash-Funktion,
f1) es überträgt (124) jedes der K Kryptogramme KA*_{k.20} und den digitalen Abdruck KA₂₀-Check an das zweite Endgerät,
- wobei das zweite Endgerät die folgenden Schritte ausführt:
a2) es empfängt (132) die von den drahtlosen Sendern gesendeten elektromagnetischen Wellen, deren Leistungen im Bereich dieses zweiten Endgeräts höher sind als eine zweite vorbestimmte Erkennbarkeitsschwelle Pₘᵢₙ₂, wobei die Anzahl dieser Sender, deren elektromagnetische Wellen vom zweiten Endgerät empfangen werden, gleich einer dritten natürlichen Zahl J höher als oder gleich eins ist,
b2) es entnimmt (134), durch Demodulation der empfangenen elektromagnetischen Wellen, nur die von jedem dieser J drahtlosen Sender gesendeten Kenndaten,
c2) es konstruiert (136-144, 154; 178; 192; 202) M unterschiedliche Schlüssel KS_{m,22}, indem es für jeden Schlüssel KS_{m,22} in der gleichen Weise vorgeht wie im Schritt c1), aber unter Verwendung der im Schritt b2) entnommenen Kenndaten anstelle der im Schritt b1) entnommenen Kenndaten, wobei M eine vierte natürliche Zahl höher als oder gleich eins ist,
d2) es empfängt die vom ersten Endgerät übertragene K Kryptogramme KA*_{k,20} und den digitalen Abdruck KA₂₀-Check ,
e2) so lange mindestens eines der empfangenen Kryptogramme KA*_{k.20} nicht korrekt entschlüsselt wurde, wiederholt es nacheinander die folgenden Schritte, indem es jedes Mal ein neues Kryptogramm wählt (162), das aus der aus den empfangene K Kryptogrammen KA*_{k.20}) bestehenden Gruppe gewählt wird :
d2-1) es entschlüsselt (156) das gewählte Kryptogramm mit Hilfe eines der konstruierten Schlüssel KS_{m,22} und erhält so einen Schlüssel KA₂₂,
d2-2) es konstruiert (158) einen digitalen Abdruck KA₂₂-Check dieses Schlüssels KA₂₂ mit Hilfe der gleichen Hash-Funktion wie die im Schritt e1) verwendete,
d2-3) es vergleicht (160) diesen konstruierten Abdruck KA₂₂-Check mit dem empfangenen Abdruck KA₂₀-Check,
d2-4) wenn die digitalen Abdrücke KA₂₀-Check und KA₂₂-Check unterschiedlich sind,
kehrt es zum Schritt d2-1) zurück, um mit Hilfe eines neuen Schlüssels KS_{m,22} die Schritte d2-1) bis d2-3) erneut auszuführen, und
d2-5) nur wenn die digitalen Abdrücke KA₂₀-Check und KA₂₂-Check gleich sind, wurde das Kryptogramm KA*_{k,20} korrekt entschlüsselt, und es speichert (164) den Schlüssel KA₂₂ als der dem Schlüssel KA₂₀ gleiche Schlüssel, der jetzt mit dem ersten Endgerät gemeinsam genutzt wird, dann
- nach dem Schritt d2-5) weist das Verfahren die Verwendung des Schlüssels KA₂₂, der jetzt gemeinsam genutzt wird, auf, um die gesicherte Informationsaustauschverbindung aufzubauen, auf der die zwischen diesen zwei Endgeräten ausgetauschten Informationen mit Hilfe dieses Schlüssels KA₂₂ entschlüsselt und verschlüsselt werden, wobei diese gesicherte Verbindung mittels des Informationsübertragung-Fernnetzes aufgebaut wird, das unabhängig von den drahtlosen Sendern der Einheit drahtloser Sender arbeitet.

2. Verfahren nach Anspruch 1, wobei:
- eines der ersten und zweiten Endgeräte ein Synchronisationssignal an das andere der ersten und zweiten Endgeräte überträgt (100), dann
- als Antwort auf die Übertragung dieses Synchronisationssignals das erste Endgerät die Ausführung der Schritte a1) und b1) auslöst, und das zweite Endgerät die Ausführung der Schritte a2) und b2) auslöst.

3. Verfahren nach einem der vorhergehenden Ansprüche, wobei jeder entnommene Kenndatenwert mindestens die MAC-Adresse ("Media Access Control") des drahtlosen Senders der empfangenen elektromagnetischen Wellen aufweist.

4. Verfahren nach einem der vorhergehenden Ansprüche, wobei:
- das erste Endgerät nach dem Schritt b1) und vor dem Schritt c1) die Anzahl entnommener Kenndaten mit einer vorbestimmten Schwelle Lₘₐₓ₁ vergleicht (108), und nur, wenn die Anzahl entnommener Kenndaten höher ist als diese Schwelle Lₘₐₓ₁, das erste Endgerät Lₘₐₓ₁, Kenndaten aus der Einheit der im Schritt b1) entnommenen Kenndaten abhängig von einem ersten vorbestimmten Satz von Auswahlkriterien auswählt (112), dann nur die so ausgewählten Kenndaten bei den folgenden Schritten vom ersten Endgerät verwendet werden,
- das zweite Endgerät nach dem Schritt b2) und vor dem Schritt c2) die Anzahl entnommener Kenndaten mit einer vorbestimmten Schwelle Lₘₐₓ₂ vergleicht (138), und nur, wenn die Anzahl entnommener Kenndaten höher ist als diese Schwelle Lₘₐₓ₂, das zweite Endgerät Lₘₐₓ₂ entnommene Kenndaten aus der Einheit der im Schritt b2) entnommenen Kenndaten abhängig vom gleichen vorbestimmten ersten Satz von Auswahlkriterien auswählt (142).

5. Verfahren nach Anspruch 4, wobei der erste Satz ein Auswahlkriterium aufweist, das nur die aus den leistungsfähigsten empfangenen elektromagnetischen Wellen entnommenen Kenndaten auswählt.

6. Verfahren nach einem der vorhergehenden Ansprüche, wobei im Schritt c1) jeder Schlüssel KS_{k.20} ausgehend von jeder der Kenndaten einer Teileinheit von im Schritt b1) entnommenen mindestens Nₛ unterschiedlichen Kenndaten konstruiert wird (106-116; 166; 190; 200), wobei die zur Konstruktion der K Schlüssel KS_{k.20} verwendeten Teileinheiten sich durch die Kenndaten voneinander unterscheiden, die sie enthalten, wobei Nₛ eine vorbestimmte minimale Anzahl von Kenndaten ist, die dem ersten und dem zweiten Endgerät gemeinsam sein müssen, damit sie als nahe beieinander angesehen werden, wobei die Anzahl Nₛ höher als oder gleich zwei ist.

7. Verfahren nach Anspruch 6, wobei im Schritt c1) unter der Gesamtheit der möglichen Teileinheiten von Nₛ Schlüsseln das erste Endgerät daraus nur K abhängig von einem zweiten vorbestimmten Satz von Auswahlkriterien auswählt (166, 200).

8. Verfahren nach Anspruch 7, wobei der zweite Satz von Auswahlkriterien ein vorbestimmtes Auswahlkriterium aufweist, das nur die Teileinheiten auswählt, die eine vorbestimmte Anzahl Nₕ von aus empfangenen elektromagnetischen Wellen, deren Leistung höher ist als eine erste vorbestimmte Schwelle Pₕ, entnommenen Kenndaten und Nₛ-Nₕ aus empfangenen elektromagnetischen Wellen, deren Leistungen niedriger sind als eine zweite Schwelle Pr, entnommenen Kenndaten enthalten, wobei Nₕ niedriger ist als Nₛ und die zweite Schwelle P_{f} niedriger als die oder gleich der Schwelle Pₕ ist.

9. Verfahren nach einem der Ansprüche 6 bis 8, wobei im Schritt c1) das erste Endgerät die Anzahl Nₛ abhängig von der Anzahl von im Schritt b1) entnommenen Kenndaten bestimmt (114).

10. Verfahren nach einem der vorhergehenden Ansprüche, wobei:
- das erste Endgerät eine Zufallszahl oder eine Pseudozufallszahl zieht (200), dann
- das erste Endgerät unter den vorab gespeicherten Sätzen von mehreren ersten oder mehreren zweiten Auswahlkriterien ein erstes oder ein zweites Auswahlkriterium wählt (200), das abhängig von dieser gezogenen Zufallszahl oder Pseudozufallszahl zu verwenden ist, und
- das erste Endgerät diese gezogene Zufallszahl oder Pseudozufallszahl an das zweite Endgerät überträgt, und
- als Antwort das zweite Endgerät in der gleichen vorab gespeicherten Einheit von mehreren ersten oder zweiten Sätzen von Auswahlkriterien und in gleicher Weise wie das erste Endgerät das erste oder das zweite Auswahlkriterium wählt (202), das abhängig von der empfangenen Zufallszahl oder Pseudozufallszahl zu verwenden ist.

11. Verfahren nach einem der vorhergehenden Ansprüche, wobei, im Schritt c1), das erste Endgerät jeden Verschlüsselungsschlüssel KS_{k.20} ausgehend zusätzlich von einer dem zweiten Endgerät bekannten und einem dritten Endgerät unbekannten geheimen Information konstruiert, wobei dieses dritte Endgerät auch geeignet ist, die Schritte a2) bis e2) auszuführen.

12. Verfahren zur Ausführung der für die Anwendung eines Verfahrens gemäß einem der vorhergehenden Ansprüche notwendigen Schritte durch das erste Endgerät, wobei das erste Endgerät bei der Ausführung dieses Verfahrens die folgenden Schritte ausführt :
- es erhält (118) einen mit dem zweiten Endgerät gemeinsam zu nutzenden Schlüssel KA₂₀,
a1) es empfängt (102) die von den drahtlose Sendern gesendeten elektromagnetischen Wellen, deren Leistungen im Bereich dieses ersten Endgeräts höher sind als eine erste vorbestimmte Erkennbarkeitsschwelle Pₘᵢₙ₁, wobei die Anzahl dieser Sender, deren elektromagnetische Wellen vom ersten Endgerät empfangen werden, gleich einer ersten natürlichen Zahl N höher als oder gleich eins ist, wobei jeder dieser drahtlosen Sender sich von den ersten und zweiten Endgeräten unterscheidet,
b1) es entnimmt (104), durch Demodulation der empfangenen elektromagnetischen Wellen, nur die von jedem dieser N drahtlosen Sender gesendeten Kenndaten,
c1) es konstruiert (106-116; 166; 190; 200) einen Verschlüsselungsschlüssel KS_{k.20} ausgehend von mindestens einem im Schritt b1) entnommenen Kenndatenwert, dann d1) verschlüsselt es (120) den Schlüssel KA₂₀ mit Hilfe des konstruierten Verschlüsselungsschlüssels KS_{k.20}, wobei die Schritte c1) und d1) für K unterschiedliche entnommene Kenndaten wiederholt werden, um K unterschiedliche Kryptogramme KA*_{k.20} zu erhalten, wobei K eine zweite natürliche Zahl höher als oder gleich eins ist,
e1) es konstruiert (122) einen digitalen Abdruck KA₂₀-Check des Schlüssels KA₂₀ mit Hilfe einer Hash-Funktion,
f1) es überträgt (124) jedes der K Kryptogramme KA*_{k.20} und den digitalen Abdruck KA₂₀-Check an das zweite Endgerät, dann
- verwendet es nach dem Schritt d2-5) den Schlüssel KA₂₀, der jetzt gemeinsam genutzt wird, um die gesicherte Informationsaustauschverbindung aufzubauen, auf der die zwischen diesem ersten Endgerät und dem zweiten Endgerät ausgetauschten Informationen mit Hilfe dieses Schlüssels KA₂₀ entschlüsselt und verschlüsselt werden, wobei diese gesicherte Verbindung mittels des Informationsübertragung-Fernnetzes aufgebaut wird, das unabhängig von den drahtlosen Sendern arbeitet.

13. Verfahren zur Ausführung der zur Anwendung eines Verfahrens gemäß einem der Ansprüche 1 bis 11 durch das zweite Endgerät notwendigen Schritte, wobei das zweite Endgerät bei der Ausführung dieses Verfahrens die folgenden Schritte ausführt :
a2) es empfängt (132) die von den drahtlosen Sendern gesendeten elektromagnetischen Wellen, deren Leistungen im Bereich dieses zweiten Endgeräts höher sind als eine zweite vorbestimmte Erkennbarkeitsschwelle Pₘᵢₙ₂, wobei die Anzahl dieser Sender, deren elektromagnetische Wellen vom zweiten Endgerät empfangen werden, gleich einer dritten natürlichen Zahl J höher als oder gleich eins ist, wobei jeder dieser drahtlosen Sender sich von den ersten und zweiten Endgeräten unterscheidet,
b2) es entnimmt (134), durch Demodulation der empfangenen elektromagnetischen Wellen, nur die von jedem dieser J drahtlosen Sender gesendeten Kenndaten,
c2) es konstruiert (136-144, 154; 178; 192; 202) M unterschiedliche Schlüssel KS_{m,22}, indem es für jeden Schlüssel KS_{m,22} in der gleichen Weise vorgeht wie im Schritt c1), aber unter Verwendung der im Schritt b2) entnommenen Kenndaten anstelle der im Schritt b1) entnommenen Kenndaten, wobei M eine vierte natürliche Zahl höher als oder gleich eins ist,
d2) es empfängt die K Kryptogramme KA*_{k.20} und den vom ersten Endgerät übertragenen digitalen Abdruck KA₂₀-Check,
e2) so lange mindestens eines der empfangenen Kryptogramme KA*_{k.20} nicht korrekt entschlüsselt wurde, wiederholt es nacheinander die folgenden Schritte, indem es jedes Mal ein neues Kryptogramm auswählt (162), das aus der Gruppe gewählt wird, die aus den K empfangenen Kryptogrammen KA*_{k,20} besteht:
d2-1) es entschlüsselt (156) das ausgewählte Kryptogramm mit Hilfe eines der konstruierten Schlüssel KS_{m,22} und erhält so einen Schlüssel KA₂₂,
d2-2) es konstruiert (158) einen digitalen Abdruck KA₂₂-Check dieses Schlüssels KA₂₂ mit Hilfe der gleichen Hash-Funktion wie die im Schritt e1) verwendete,
d2-3) es vergleicht (160) diesen konstruierten Abdruck KA₂₂-Check mit dem empfangenen Abdruck KA₂₀-Check,
d2-4) wenn die digitalen Abdrücke KA₂₀-Check und KA₂₂-Check unterschiedlich sind, kehrt es zum Schritt d2-1) zurück, um die Schritte d2-1) bis d2-3) mit Hilfe eines neuen Schlüssels KS_{m,22} erneut auszuführen, und
d2-5) nur wenn die digitalen Abdrücke KA₂₀-Check und KA₂₂-Check gleich sind, wurde das Kryptogramm KA*_{k,20} korrekt entschlüsselt, und es speichert (164) den Schlüssel KA₂₂ als der gleiche Schlüssel wie der Schlüssel KA₂₀, der jetzt mit dem ersten Endgerät gemeinsam genutzt wird, dann
- nach dem Schritt d2-5) verwendet es den Schlüssel KA₂₂, der jetzt gemeinsam genutzt wird, um die gesicherte Informationsaustauschverbindung aufzubauen, auf der die ausgetauschten Informationen zwischen diesem zweiten Endgerät und dem ersten Endgerät mit Hilfe dieses Schlüssels KA₂₂ entschlüsselt und verschlüsselt werden, wobei diese gesicherte Verbindung mittels des Informationsübertragung-Fernnetzes aufgebaut wird, das unabhängig von den drahtlosen Sendern arbeitet.

14. Erstes Endgerät (11) zur Anwendung eines Verfahrens gemäß einem der Ansprüche 1 bis 11, wobei das erste Endgerät konfiguriert ist, um die folgenden Schritte auszuführen :
- Erhalt eines mit dem zweiten Endgerät gemeinsam zu nutzenden Schlüssels KA₂₀,
a1) Empfang der von den drahtlosen Sendern gesendeten elektromagnetischen Wellen, deren Leistungen im Bereich dieses ersten Endgeräts höher sind als eine erste vorbestimmte Erkennbarkeitsschwelle Pₘᵢₙ₁, wobei die Anzahl dieser Sender, deren elektromagnetische Wellen vom ersten Endgerät empfangen werden, gleich einer ersten natürlichen Zahl N höher als oder gleich eins ist,
b1) Entnahme, durch Demodulation der empfangenen elektromagnetischen Wellen, nur der von jedem dieser N drahtlosen Sender gesendeten Kenndaten,
c1) Konstruieren eines Verschlüsselungsschlüssels KS_{k.20} ausgehend von mindestens einem im Schritt b1) entnommenen Kenndatenwert, dann
d1) Verschlüsseln des Schlüssels KA₂₀ mit Hilfe des konstruierten Verschlüsselungsschlüssels KS_{k.20}, wobei die Schritte c1) und dI) für K unterschiedliche entnommene Kenndaten wiederholt werden, um K unterschiedliche Kryptogramme KA*_{k,20} zu erhalten, wobei K eine zweite natürliche Zahl höher als oder gleich eins ist,
e1) Konstruieren eines digitalen Abdrucks KA₂₀-Check des Schlüssels KA₂₀ mit Hilfe einer Hash-Funktion,
f1) Übertragen jedes der K Kryptogramme KA*_{k,20} und des digitalen Abdrucks KA₂₀-Check an das zweite Endgerät, dann
- nach dem Schritt d2-5) Verwenden des Schlüssels KA₂₀, der jetzt gemeinsam genutzt wird, um die gesicherte Informationsaustauschverbindung aufzubauen, auf der die ausgetauschten Informationen mit Hilfe dieses Schlüssels KA₂₀ zwischen diesem ersten Endgerät und dem zweiten Endgerät entschlüsselt und verschlüsselt werden, wobei diese gesicherte Verbindung mittels des Informationsübertragung-Fernnetzes aufgebaut wird, das unabhängig von den drahtlosen Sendern arbeitet.

15. Zweites Endgerät (22) zur Anwendung eines Verfahrens gemäß einem der Ansprüche 1 bis 11, wobei das zweite Endgerät konfiguriert ist, die folgenden Schritte auszuführen :
a2) Empfang der von den drahtlosen Sendern gesendeten elektromagnetischen Wellen, deren Leistungen im Bereich dieses zweiten Endgeräts höher sind als eine zweite vorbestimmte Erkennbarkeitsschwelle Pₘᵢₙ₂, wobei die Anzahl dieser Sender, deren elektromagnetische Wellen vom zweiten Endgerät empfangen werden, höher ist als eine dritte natürliche Zahl J höher als oder gleich eins,
b2) Entnahme, durch Demodulation der empfangenen elektromagnetischen Wellen, nur der von jedem dieser J drahtlosen Sender gesendeten Kenndaten,
c2) Konstruieren von M unterschiedlichen Schlüsseln KS_{m.22}, indem für jeden Schlüssel KS_{m,22} in gleicher Weise vorgegangen wird wie im Schritt c1), aber unter Verwendung der im Schritt b2) entnommenen Kenndaten anstelle der im Schritt b1) entnommene Kenndaten, wobei M eine vierte natürliche Zahl höher als oder gleich eins ist,
d2) Empfang der vom ersten Endgerät übertragenen K Kryptogramme KA*_{k.20} und des digitalen Abdrucks KA₂₀-Check,
e2) so lange mindestens eines der empfangenen Kryptogramme KA*_{k,20} nicht korrekt entschlüsselt wurde, nacheinander Wiederholen der folgenden Schritte, indem jedes Mal ein neues Kryptogramm ausgewählt wird, das aus der aus den K empfangenen K Kryptogrammen KA*_{k.20} bestehenden Gruppe gewählt wurde :
d2-1) Entschlüsseln des ausgewählten Kryptogramms mit Hilfe eines der konstruierten Schlüssel KS_{m,22} und so Erhalt eines Schlüssels KA₂₂,
d2-2) Konstruieren eines digitalen Abdrucks KA₂₂-Check dieses Schlüssels KA₂₂ mit Hilfe der gleichen Hash-Funktion wie die im Schritt e1) verwendete,
d2-3) Vergleich dieses konstruierten Abdrucks KA₂₂-Check mit dem empfangenen Abdruck KA₂₀-Check,
d2-4) wenn die digitalen Abdrücke KA₂₀-Check und KA₂₂-Check unterschiedlich sind, Rückkehr zum Schritt d2-1), um die Schritte d2-1) bis d2-3) erneut mit Hilfe eines neuen Schlüssels KS_{m,22} auszuführen, und
d2-5) nur wenn die digitalen Abdrücke KA₂₀-Check und KA₂₂-Check gleich sind, wurde das Kryptogramm KA*_{k.20} korrekt entschlüsselt, und es speichert den Schlüssel KA₂₂ als der Schlüssel gleich dem Schlüssel KA₂₀, der jetzt mit dem ersten Endgerät gemeinsam genutzt wird, wobei dieser Schlüssel KA₂₂ verwendbar ist, um die Informationsaustauschvorgänge zwischen diesen zwei Endgeräten zu entschlüsseln und zu verschlüsseln,
- nach dem Schritt d2-5), Verwenden des Schlüssels KA₂₂, der jetzt gemeinsam genutzt wird, um die gesicherte Informationsaustauschverbindung aufzubauen, auf der die ausgetauschten Informationen zwischen diesem zweiten Endgerät und dem ersten Endgerät mit Hilfe dieses Schlüssels KA₂₂ entschlüsselt und verschlüsselt werden, wobei diese gesicherte Verbindung mittels des Informationsübertragung-Fernnetzes aufgebaut wird, das unabhängig von den drahtlosen Sendern arbeitet.

## Claims

1. Method for establishing, via a wide-area information transmission network, a secure link for exchanging information between a first and a second terminal, on the condition that these two terminals are in proximity to one another, wherein:
- each wireless transmitter in a set of wireless transmitters comprising at least one wireless transmitter transmits electromagnetic waves modulated, at least by instant, depending on a characteristic datum of this wireless transmitter or of the wireless local-area network to which it belongs, each of the wireless transmitters in this set being different from the first and second terminals,
a characteristic datum of a wireless transmitter being a datum which makes it possible to unambiguously identify this wireless transmitter which transmits the electromagnetic waves among all of the wireless transmitters in said set and a characteristic datum of a wireless local-area network being a datum which makes it possible to unambiguously identify the wireless local-area network to which the wireless transmitter which transmits the electromagnetic waves belongs,
- the first terminal executing the following steps:
- it obtains (118) a key KA₂₀ to be shared with the second terminal,
a1) it receives (102) the electromagnetic waves transmitted by the wireless transmitters the powers of which, at this first terminal, are above a first predetermined detectability threshold Pₘᵢₙ₁, the number of these transmitters from which the electromagnetic waves are received by the first terminal being equal to a first natural number N which is greater than or equal to one,
b1) it extracts (104), by demodulating the received electromagnetic waves, only the characteristic data transmitted by each of these N wireless transmitters,
c1) it constructs (106-116; 166; 190; 200) an encryption key KS_{k,20} on the basis of at least one characteristic datum extracted during step b1), then
d1) it encrypts (120) the key KA₂₀ using the constructed encryption key KS_{k,20}, steps c1) and d1) being reiterated for K distinct extracted characteristic data so as to obtain K different cryptograms KA*_{k,20}, where K is a second natural number which is greater than or equal to one,
e1) it constructs (122) a message digest KA₂₀-Check of the key KA₂₀ using a hash function,
f1) it transmits (124) each of the K cryptograms KA*_{k,20} and the message digest KA₂₀-Check to the second terminal,
- the second terminal executing the following steps:
a2) it receives (132) the electromagnetic waves transmitted by the wireless transmitters the powers of which, at the second terminal, are above a second predetermined detectability threshold Pₘᵢₙ₂, the number of these transmitters from which the electromagnetic waves are received by the second terminal being equal to a third natural number J which is greater than or equal to one,
b2) it extracts (134), by demodulating the received electromagnetic waves, only the characteristic data transmitted by each of these J wireless transmitters,
c2) it constructs (136-144, 154; 178; 192; 202) M different keys KS_{m,22} by proceeding, for each key KS_{m,22}, in the same way as during step c1) but using the characteristic data extracted during step b2) instead of the characteristic data extracted during step b1), where M is a fourth natural number which is greater than or equal to one,
d2) it receives the K cryptograms KA*_{k,20} and the message digest KA₂₀-Check transmitted by the first terminal,
e2) as long as at least one of the received cryptograms KA*_{k,20} has not been correctly decrypted, it successively reiterates the following steps, each time selecting (162) a new cryptogram chosen from the group consisting of the K received cryptograms KA*_{k,20}:
d2-1) it decrypts (156) the selected cryptogram using one of the constructed keys KS_{m,22} and thus obtains a key KA₂₂,
d2-2) it constructs (158) a message digest KA₂₂-Check of this key KA₂₂ using the same hash function as that used during step e1),
d2-3) it compares (160) this constructed digest KA₂₂-Check with the received digest KA₂₀-Check,
d2-4) if the message digests KA₂₀-Check and KA₂₂-Check are different, it returns to step d2-1) in order to execute steps d2-1) to d2-3) again using a new key KS_{m,22}, and
d2-5) only if the message digests KA₂₀-Check and KA₂₂-Check are identical, the cryptogram KA*_{k,20} has been correctly decrypted and it stores (164) the key KA₂₂ as the key which is identical to the key KA₂₀ which is now shared with the first terminal, then
- after step d2-5), the method comprises using the key KA₂₂, which is now shared, to establish the secure link for exchanging information, on which the exchanged information is decrypted and encrypted, between these two terminals using this key KA₂₂, this secure link being established via the wide-area information transmission network, which operates independently of the wireless transmitters in said set of wireless transmitters.

2. Method according to Claim 1, wherein:
- one of the first and second terminals transmits (100) a synchronization signal to the other of the first and second terminals, then
- in response to the transmission of this synchronization signal, the first terminal triggers the execution of steps a1) and b1) and the second terminal triggers the execution of steps a2) and b2).

3. Method according to either one of the preceding claims, wherein each extracted characteristic datum comprises at least the MAC (Media Access Control) address of the wireless transmitter of the received electromagnetic waves.

4. Method according to any one of the preceding claims, wherein:
- after step b1) and before step c1), the first terminal compares (108) the number of extracted characteristic data with a predetermined threshold Lₘₐₓ₁, and, only if the number of extracted characteristic data is above this threshold Lₘₐₓ₁, the first terminal selects (112) Lₘₐₓ₁ characteristic data among all of the characteristic data extracted during step b1) depending on a first predetermined set of selection criteria, then only the characteristic data thus selected are used during the following steps by the first terminal,
- after step b2) and before step c2), the second terminal compares (138) the number of extracted characteristic data with a predetermined threshold Lₘₐₓ₂ and, only if the number of extracted characteristic data is above this threshold Lₘₐₓ₂, the second terminal selects (142) Lₘₐₓ₂ extracted characteristic data among all of the characteristic data extracted during step b2) depending on the same first predetermined set of selection criteria.

5. Method according to Claim 4, wherein the first set comprises a selection criterion which selects only the characteristic data extracted from the most powerful received electromagnetic waves.

6. Method according to any one of the preceding claims, wherein, during step c1), each key KS_{k,20} is constructed (106-116; 166; 190; 200) on the basis of each of the characteristic data in a respective subset of at least Nₛ different characteristic data extracted during step b1), the subsets used to construct the K keys KS_{k,20} differing from one another in the characteristic data which they contain, where Nₛ is a predetermined minimum number of characteristic data which must be common to the first and to the second terminal in order for them to be considered to be in proximity to one another, the number Nₛ being greater than or equal to two.

7. Method according to Claim 6, wherein, during step c1), among all of the possible subsets of Nₛ keys, the first terminal selects (166; 200) only K of them depending on a second predetermined set of selection criteria.

8. Method according to Claim 7, wherein the second set of selection criteria comprises a predetermined selection criterion which selects only the subsets which contain a predetermined number Nₕ of characteristic data extracted from received electromagnetic waves the power of which is above a first predetermined threshold Pₕ and Nₛ-Nₕ characteristic data extracted from received electromagnetic waves the powers of which are below a second threshold P_{f}, where Nₕ is less than Nₛ and the second threshold P_{f} is below or equal to the threshold Pₕ.

9. Method according to any one of Claims 6 to 8, wherein, during step c1), the first terminal determines (114) the number Nₛ depending on the number of characteristic data extracted during step b1).

10. Method according to any one of the preceding claims, wherein:
- the first terminal draws (200) a random or pseudo-random number, then
- the first terminal chooses (200), from the prestored sets of several first or several second selection criteria, a first or a second selection criterion to be used depending on this drawn random or pseudo-random number, and
- the first terminal transmits this drawn random or pseudo-random number to the second terminal, and
- in response, the second terminal chooses (202), from the same prestored set of several first or second sets of selection criteria and in the same way as the first terminal, the first or the second selection criterion to be used depending on the received random or pseudo-random number.

11. Method according to any one of the preceding claims, wherein, during step c1), the first terminal constructs each encryption key KS_{k,20} on the basis, in addition, of secret information known to the second terminal and unknown to a third terminal, this third terminal also being able to execute steps a2) to e2).

12. Method for the first terminal to execute the steps required to implement a method according to any one of the preceding claims, when this method is executed, the first terminal executing the following steps:
- it obtains (118) a key KA₂₀ to be shared with the second terminal,
a1) it receives (102) the electromagnetic waves transmitted by the wireless transmitters the powers of which, at this first terminal, are above a first predetermined detectability threshold Pₘᵢₙ₁, the number of these transmitters from which the electromagnetic waves are received by the first terminal being equal to a first natural number N which is greater than or equal to one, each of these wireless transmitters being different from the first and second terminals,
b1) it extracts (104), by demodulating the received electromagnetic waves, only the characteristic data transmitted by each of these N wireless transmitters,
c1) it constructs (106-116; 166; 190; 200) an encryption key KS_{k,20} on the basis of at least one characteristic datum extracted during step b1), then
d1) it encrypts (120) the key KA₂₀ using the constructed encryption key KS_{k,20}, steps c1) and d1) being reiterated for K distinct extracted characteristic data so as to obtain K different cryptograms KA*_{k,20}, where K is a second natural number which is greater than or equal to one,
e1) it constructs (122) a message digest KA₂₀-Check of the key KA₂₀ using a hash function,
f1) it transmits (124) each of the K cryptograms KA*_{k,20} and the message digest KA₂₀-Check to the second terminal, then
- after step d2-5), it uses the key KA₂₀, which is now shared, to establish the secure link for exchanging information, on which the exchanged information is decrypted and encrypted, between this first terminal and the second terminal using this key KA₂₀, this secure link being established via the wide-area information transmission network, which operates independently of the wireless transmitters.

13. Method for the second terminal to execute the steps required to implement a method according to any one of Claims 1 to 11, when this method is executed, the second terminal executing the following steps:
a2) it receives (132) the electromagnetic waves transmitted by the wireless transmitters the powers of which, at this second terminal, are above a second predetermined detectability threshold Pₘᵢₙ₂, the number of these transmitters from which the electromagnetic waves are received by the second terminal being equal to a third natural number J which is greater than or equal to one, each of these wireless transmitters being different from the first and second terminals,
b2) it extracts (134), by demodulating the received electromagnetic waves, only the characteristic data transmitted by each of these J wireless transmitters,
c2) it constructs (136-144, 154; 178; 192; 202) M different keys KS_{m,22} by proceeding, for each key KS_{m,22}, in the same way as during step c1) but using the characteristic data extracted during step b2) instead of the characteristic data extracted during step b1), where M is a fourth natural number which is greater than or equal to one,
d2) it receives the K cryptograms KA*_{k,20} and the message digest KA₂₀-Check transmitted by the first terminal,
e2) as long as at least one of the received cryptograms KA*_{k,20} has not been correctly decrypted, it successively reiterates the following steps, each time selecting (162) a new cryptogram chosen from the group consisting of the K received cryptograms KA*_{k,20}:
d2-1) it decrypts (156) the selected cryptogram using one of the constructed keys KS_{m,22} and thus obtains a key KA₂₂,
d2-2) it constructs (158) a message digest KA₂₂-Check of this key KA₂₂ using the same hash function as that used during step e1),
d2-3) it compares (160) this constructed digest KA₂₂-Check with the received digest KA₂₀-Check,
d2-4) if the message digests KA₂₀-Check and KA₂₂-Check are different, it returns to step d2-1) in order to execute steps d2-1) to d2-3) again using a new key KS_{m,22}, and
d2-5) only if the message digests KA₂₀-Check and KA₂₂-Check are identical, the cryptogram KA*_{k,20} has been correctly decrypted and it stores (164) the key KA₂₂ as the key which is identical to the key KA₂₀ which is now shared with the first terminal, then
- after step d2-5), it uses the key KA₂₂, which is now shared, to establish the secure link for exchanging information, on which the exchanged information is decrypted and encrypted, between this second terminal and the first terminal using this key KA₂₂, this secure link being established via the wide-area information transmission network, which operates independently of the wireless transmitters.

14. First terminal (11) for implementing a method according to any one of Claims 1 to 11, the first terminal being configured to execute the following steps:
- obtaining a key KA₂₀ to be shared with the second terminal,
a1) receiving the electromagnetic waves transmitted by the wireless transmitters the powers of which, at this first terminal, are above a first predetermined detectability threshold Pₘᵢₙ₁, the number of these transmitters from which the electromagnetic waves are received by the first terminal being equal to a first natural number N which is greater than or equal to one,
b1) extracting, by demodulating the received electromagnetic waves, only the characteristic data transmitted by each of these N wireless transmitters,
c1) constructing an encryption key KS_{k,20} on the basis of at least one characteristic datum extracted during step b1), then
d1) encrypting the key KA₂₀ using the constructed encryption key KS_{k,20}, steps c1) and d1) being reiterated for K distinct extracted characteristic data so as to obtain K different cryptograms KA*_{k,20}, where K is a second natural number which is greater than or equal to one,
e1) constructing a message digest KA₂₀-Check of the key KA₂₀ using a hash function, f1) transmitting each of the K cryptograms KA*_{k,20} and the message digest KA₂₀-Check to the second terminal, then
- after step d2-5), using the key KA₂₀, which is now shared, to establish the secure link for exchanging information, on which the exchanged information is decrypted and encrypted, between this first terminal and the second terminal using this key KA₂₀, this secure link being established via the wide-area information transmission network, which operates independently of the wireless transmitters.

15. Second terminal (22) for implementing a method according to any one of Claims 1 to 11, the second terminal being configured to execute the following steps:
a2) receiving the electromagnetic waves transmitted by the wireless transmitters the powers of which, at this second terminal, are above a second predetermined detectability threshold Pₘᵢₙ₂, the number of these transmitters from which the electromagnetic waves are received by the second terminal being equal to a third natural number J which is greater than or equal to one,
b2) extracting, by demodulating the received electromagnetic waves, only the characteristic data transmitted by each of these J wireless transmitters,
c2) constructing M different keys KS_{m,22} by proceeding, for each key KS_{m,22}, in the same way as during step c1) but using the characteristic data extracted during step b2) instead of the characteristic data extracted during step b1), where M is a fourth natural number which is greater than or equal to one,
d2) receiving the K cryptograms KA*_{k,20} and the message digest KA₂₀-Check transmitted by the first terminal,
e2) as long as at least one of the received cryptograms KA*_{k,20} has not been correctly decrypted, successively reiterating the following steps, each time selecting a new cryptogram chosen from the group consisting of the K received cryptograms KA*_{k,20}:
d2-1) decrypting the selected cryptogram using one of the constructed keys KS_{m,22} and thus obtaining a key KA₂₂,
d2-2) constructing a message digest KA₂₂-Check of this key KA₂₂ using the same hash function as that used during step e1),
d2-3) comparing this constructed digest KA₂₂-Check with the received digest KA₂₀-Check,
d2-4) if the message digests KA₂₀-Check and KA₂₂-Check are different, returning to step d2-1) in order to execute steps d2-1) to d2-3) again using a new key KS_{m,22}, and
d2-5) only if the message digests KA₂₀-Check and KA₂₂-Check are identical, the cryptogram KA*_{k,20} has been correctly decrypted and storing the key KA₂₂ as the key which is identical to the key KA₂₀ which is now shared with the first terminal,
this key KA₂₂ being able to be used to decrypt and encrypt the exchanges of information between these two terminals,
- after step d2-5), using the key KA₂₂, which is now shared, to establish the secure link for exchanging information, on which the exchanged information is decrypted and encrypted, between this second terminal and the first terminal using this key KA₂₂, this secure link being established via the wide-area information transmission network, which operates independently of the wireless transmitters.
